# EUROPEAN PATENT SPECIFICATION

(11) **EP 4 038 936 B1**
(45) Date of publication and mention of the grant of the patent: **19.02.2025**
(21) Application number: 20789720.8
(22) Date of filing: 01.10.2020
(51) Int. Cl.: H04W 24/10, H04W 24/02, H04W 36/00, H04W 16/32, H04W 88/06, H04W 36/30

(54) **FAILURE REPORTING IN A WIRELESS COMMUNICATION NETWORK**
FEHLERBERICHTERSTATTUNG IN EINEM DRAHTLOSEN KOMMUNIKATIONSNETZ
RAPPORT DE DÉFAILLANCE DANS UN RÉSEAU DE COMMUNICATION SANS FIL

(30) Priority: 03.10.2019 US 201962910065 P
(43) Date of publication of application: 10.08.2022
(73) Proprietor: Telefonaktiebolaget LM Ericsson (publ), 164 83 Stockholm (SE)
(72) Inventor: DA SILVA, Icaro Leonardo, 170 77 Solna (SE); RUGELAND, Patrik, 117 58 Stockholm (SE)
(74) Representative: Ericsson
(86) International application number: PCT/SE2020/050927
(87) International publication number: WO 2021/066722

(56) References cited:
- WO-A1-2018/175721
- US-A1- 2019 223 073
- "3rd Generation Partnership Project; Technical Specification Group Radio Access Network; NR; Radio Resource Control (RRC) protocol specification (Release 15)", 27 September 2019 (2019-09-27), XP051799980, Retrieved from the Internet <URL:https://ftp.3gpp.org/3guInternal/3GPP_ultimate_versions_to_be_transposed/sentToDpc/38331-f70.zip 38331-f70.docx> [retrieved on 20190927]
- NTTDOCOMO ET AL: "Discussion on UE location information in SCG failure report", vol. RAN WG2, no. Prague, Czech Republic; 20190826 - 20190830, 30 August 2019 (2019-08-30), XP051769223, Retrieved from the Internet <URL:http://www.3gpp.org/ftp/tsg_ran/WG2_RL2/TSGR2_107/Docs/R2-1911467.zip> [retrieved on 20190830]
- NOKIA ET AL: "Backhaul link RLF handling", 3GPP DRAFT; R2-1900627, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, 1 March 2019 (2019-03-01), pages 1 - 8, XP051602005

## Description

### TECHNICAL FIELD

The present application relates generally to a wireless communication network, and relates more particularly to failure reporting in such a network.

### BACKGROUND

Robustness of mobility procedures to failure proves challenging particularly in New Radio (NR) systems whose radio links are more prone to fast fading due to their higher operating frequencies. Conditional mobility is one approach to improve mobility robustness in this regard. Under this approach, a wireless device may be commanded to perform a mobility procedure (e.g., handover or resume) earlier than traditionally commanded, before the source radio link quality deteriorates below a certain threshold. But the wireless device is commanded to wait to perform that mobility procedure until the wireless device detects that a certain condition is fulfilled, e.g., the source radio link quality deteriorates even further below a different threshold. Once the device detects that condition, the device may autonomously perform the mobility procedure without receiving any other signaling on the source radio link, so that the procedure proves robust to source link deterioration.

These and other types of conditional configurations nonetheless threaten to increase signaling overhead, delay mobility, and/or trigger unnecessary procedures. For example, this may be the case where a conditional configuration concerns multi-connectivity (e.g., dual connectivity).

WO 2018/175721 A1 discloses a wireless transmit/receive unit (WTRU) or network that may utilize a reconfiguration message including one or more trigger conditions. The WTRU may store and apply the reconfiguration message with delay based on the one or more trigger conditions.

3GPP TS 38.331 v 15.7.0 (2019-09) discloses a UE reporting SCG failure information to the network.

### SUMMARY

The invention is defined in the appended set of claims. According to some embodiments herein, a wireless device in multi-connectivity operation detects a failure associated with a cell group. The wireless device includes in the cell group failure report information indicating whether a conditional configuration is stored at the wireless device and/or information about a conditional configuration stored at the wireless device. In some embodiments, a radio network node that receives the report exploits this information to make a decision and/or perform an action. For example, the radio network node may decide whether to add, modify, or release the conditional configuration. Or, the radio network node may decide whether to trigger a procedure for preparing a target candidate for secondary cell group addition or master cell group addition. Or, the radio network node may transmit to the wireless device delta signaling relative to the conditional configuration. Regardless, in these and other examples, the information in the report may advantageously assist the radio network node in its actions and/or decisions. This may alternatively or additionally reduce signaling over the air interface.

More particularly, embodiments herein include a method performed by a wireless device. The method may include detecting a failure associated with a first cell group among multiple cell groups e.g., that are respectively provided by multiple radio network nodes to which the wireless device simultaneously connects in multi-connectivity operation. The method further includes transmitting a report that reports the detected failure. The report includes information. The information may include information indicating whether a conditional configuration is stored at the wireless device and/or information about a conditional configuration stored at the wireless device.

In some embodiments, the information about a conditional configuration stored at the wireless device includes information identifying a cell or frequency for which the wireless device has a conditional configuration 16 stored.

In some embodiments, the information about a conditional configuration stored at the wireless device includes information about a trigger condition on which the conditional configuration depends. For example, the information about the trigger condition may include one or more of: information identifying or describing the trigger condition; whether the trigger condition has been fulfilled; or how close the trigger condition was to being fulfilled (e.g., in terms of radio conditions) when the failure was detected.

In some embodiments, the information about a conditional configuration stored at the wireless device includes information describing a measurement performed while monitoring for fulfillment of a trigger condition for triggering application of the conditional configuration. In this case, the information about a conditional configuration stored at the wireless device may further include information indicating that a cell on which the measurement was performed is a cell for which the wireless device has a stored conditional configuration.

In some embodiments, the conditional configuration is a conditional PSCell change or addition configuration that conditionally configures a change to or addition of a PSCell for the device's multi-connectivity operation. Here, a PSCell is a primary cell of a secondary cell group included in the multiple cell groups. In one such embodiment, the method further comprises receiving the conditional PSCell change or addition configuration from the secondary cell group.

In other embodiments, the conditional configuration is a conditional PCell change or addition configuration that conditionally configures a change to or addition of a PCell for the device's multi-connectivity operation. Here, a PCell is a primary cell of a master cell group included in the multiple cell groups. In this case, the method may further comprise receiving the conditional PCell change or addition configuration from the master cell group.

In some embodiments, the conditional configuration is a conditional mobility configuration. For example, the conditional mobility configuration may be a conditional handover configuration or a conditional resume configuration. In some embodiments, the method further comprises receiving the conditional mobility configuration from a master cell group included in said multiple cell groups.

In some embodiments, the first cell group is a secondary cell group included in the multiple cell groups. In other embodiments, the first cell group is a master cell group included in the multiple cell groups.

In some embodiments, the report is transmitted to: a second cell group that is included in the multiple cell groups and that is different than the first cell group; or a second radio network node that is included in the multiple radio network nodes and that provides the second cell group, wherein a first radio network node provides the first cell group. In one such embodiment, the first cell group is a secondary cell group included in said multiple cell groups, wherein the second cell group is a master cell group included in said multiple cell groups, and wherein the second radio network node is a master node. In another embodiment, the first cell group is a master cell group included in said multiple cell groups, wherein the second cell group is a secondary cell group included in said multiple cell groups, and wherein the second radio network node is a secondary node.

In some embodiments, the conditional configuration 16 is a conditional reconfiguration.

In some embodiments, the conditional configuration is a conditional Radio Resource Control, RRC, configuration or a conditional RRC reconfiguration.

Embodiments herein also include a method performed by a radio network node. The method includes receiving, from a wireless device simultaneously connected in multi-connectivity operation to multiple radio network nodes that respectively provide multiple cell groups, a report that reports a failure associated with a first cell group among the multiple cell groups. The report includes information. The information includes information indicating whether a conditional configuration is stored at the wireless device and/or information about a conditional configuration stored at the wireless device.

In some embodiments, the information about a conditional configuration stored at the wireless device includes information identifying a cell or frequency for which the wireless device has a conditional configuration stored.

In some embodiments, the information about a conditional configuration stored at the wireless device includes information about a trigger condition on which the conditional configuration depends. For example, the information about the trigger condition may include one or more of: information identifying or describing the trigger condition; whether the trigger condition has been fulfilled; or how close the trigger condition was to being fulfilled when the failure was detected.

In some embodiments, the information about a conditional configuration stored at the wireless device includes information describing a measurement performed while monitoring for fulfillment of a trigger condition for triggering application of the conditional configuration. In this case, the information about a conditional configuration stored at the wireless device may further include information indicating that a cell on which the measurement was performed is a cell for which the wireless device has a stored conditional configuration.

In some embodiments, the conditional configuration is a conditional PSCell change or addition configuration that conditionally configures a change to or addition of a PSCell for the device's multi-connectivity operation. Here, a PSCell is a primary cell of a secondary cell group included in the multiple cell groups. In one such embodiment, the conditional PSCell change or addition configuration may be from the secondary cell group.

In other embodiments, the conditional configuration is a conditional PCell change or addition configuration that conditionally configures a change to or addition of a PCell for the device's multi-connectivity operation. Here, a PCell is a primary cell of a master cell group included in the multiple cell groups. In this case, the conditional PCell change or addition configuration may be from the master cell group.

In some embodiments, the conditional configuration is a conditional mobility configuration. For example, the conditional mobility configuration may be a conditional handover configuration or a conditional resume configuration. In some embodiments, the conditional mobility configuration is from a master cell group included in said multiple cell groups.

In some embodiments, the first cell group is a secondary cell group included in the multiple cell groups. In other embodiments, the first cell group is a master cell group included in the multiple cell groups.

In some embodiments, the radio network node is included in the multiple radio network nodes and is the radio network node that provides the second cell group. In one such embodiment, the first cell group is a secondary cell group included in said multiple cell groups, wherein the second cell group is a master cell group included in said multiple cell groups, and wherein the radio network node is a master node. In another embodiment, the first cell group is a master cell group included in said multiple cell groups, wherein the second cell group is a secondary cell group included in said multiple cell groups, and wherein the radio network node is a secondary node.

In some embodiments, the conditional configuration is a conditional reconfiguration.

In some embodiments, the conditional configuration is a conditional Radio Resource Control, RRC, configuration or a conditional RRC reconfiguration.

Regardless, in some embodiments, the method further comprises, based on the received report, making a decision and/or performing an action. For example, in some embodiments, the method further comprises: based on the received report, deciding whether to add, modify, or release the conditional configuration; and adding, modifying, or releasing the conditional configuration depending on said deciding. Alternatively or additionally, the method may further comprise, based on the received report, deciding whether to trigger a procedure for preparing a target candidate for secondary cell group addition or master cell group addition. Alternatively or additionally, the method may further comprise, based on the received report, transmitting to the wireless device delta signaling relative to the conditional configuration.

Embodiments herein also include corresponding apparatus, computer programs, and carriers of those computer programs. For example, embodiments herein include a wireless device, e.g., comprising communication circuitry and processing circuitry. The wireless device is configured to detect a failure associated with a first cell group among multiple cell groups e.g., that are respectively provided by multiple radio network nodes to which the wireless device simultaneously connects in multi-connectivity operation. The wireless device is further configured transmit a report that reports the detected failure. The report includes information. The information may include information indicating whether a conditional configuration is stored at the wireless device and/or information about a conditional configuration stored at the wireless device.

Embodiments further include a radio network node. The radio network node is configured to receive, from a wireless device simultaneously connected in multi-connectivity operation to multiple radio network nodes that respectively provide multiple cell groups, a report that reports a failure associated with a first cell group among the multiple cell groups. The report includes information. The information includes information indicating whether a conditional configuration is stored at the wireless device and/or information about a conditional configuration stored at the wireless device.

### BRIEF DESCRIPTION OF THE DRAWINGS

Figure 1 is a block diagram of a wireless communication network according to some embodiments.
Figure 2 is a logic flow diagram of a method performed by a wireless device according to the claimed invention.
Figure 3 is a logic flow diagram of a method performed by a radio network node according to the claimed invention.
Figure 4 is a block diagram of a wireless device according to some embodiments.
Figure 5 is a block diagram of a radio network node according to some embodiments.
Figure 6 is a call flow diagram of a conditional handover according to some embodiments.
Figure 7 is a call flow diagram of an SCG Failure Information procedure according to some embodiments.
Figure 8 is a block diagram of a wireless communication network according to some embodiments.
Figure 9 is a block diagram of a user equipment according to some embodiments.
Figure 10 is a block diagram of a virtualization environment according to some embodiments.
Figure 11 is a block diagram of a communication network with a host computer according to some embodiments.
Figure 12 is a block diagram of a host computer according to some embodiments.
Figure 13 is a flowchart illustrating a method implemented in a communication system, in accordance with one embodiment.
Figure 14 is a flowchart illustrating a method implemented in a communication system, in accordance with one embodiment.
Figure 15 is a flowchart illustrating a method implemented in a communication system, in accordance with one embodiment.
Figure 16 is a flowchart illustrating a method implemented in a communication system, in accordance with one embodiment.

### DETAILED DESCRIPTION

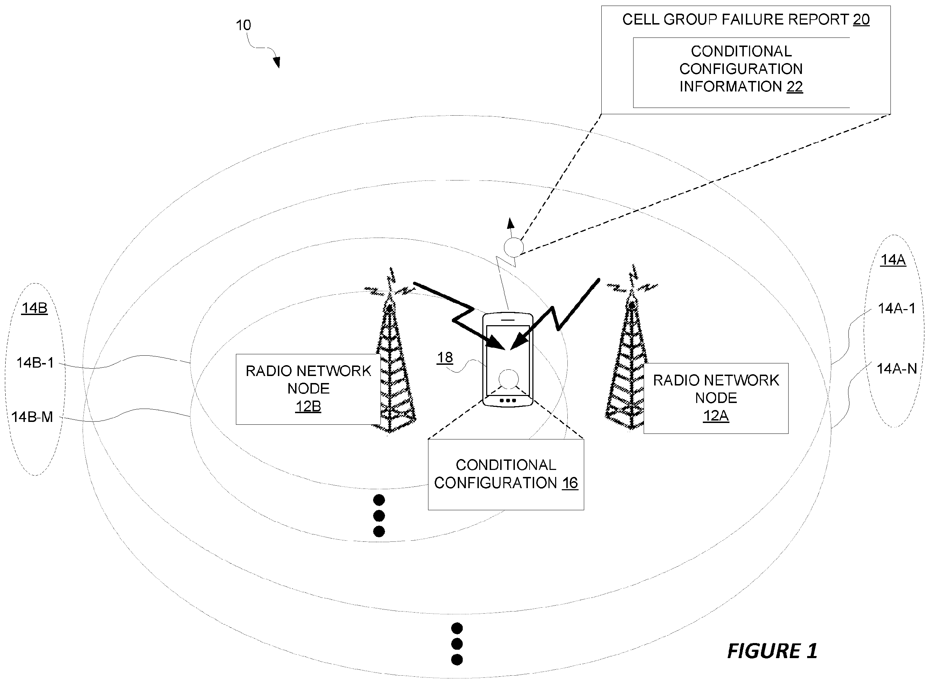

Figure 1 shows a wireless communication network 10 according to some embodiments. The network 10 as shown includes radio network nodes 12A and 12B (e.g., in the form of base stations). The radio network nodes 12A and 12B may be included in a radio access network (RAN) portion of the network 10, which may in turn connect to a core network (CN) portion (not shown).

Each radio network node 12A, 12B serves one or more cells. As shown, for example, a first radio network node 12A provides a first cell group 14A that includes N cells 14A-1,...14A-N, for N ≥ 1. A second radio network node 12B provides a second cell group 14B that includes M cells 14B-1,...14B-M, for M ≥ 1. Different cells may for instance be provided on different carrier frequencies, with different frequency bandwidths, and/or using different radio access technologies.

In some embodiments, a wireless device 18 is configured with and/or capable of multi-connectivity operation. In multi-connectivity operation, the wireless device 18 simultaneously connects (e.g., at a radio resource control, RRC, layer) to multiple different radio network nodes 12A, 12B, or to multiple different cells served by different radio network nodes 12A, 12B. The multiple different radio network nodes or cells may use the same radio access technology (e.g., both may use Evolved Universal Terrestrial Radio Access (E-UTRA) or both may use New Radio (NR)). Or, the multiple different radio network nodes or cells may use different radio access technologies, e.g., one may use E-UTRA and another may use NR.

One example of multi-connectivity is dual connectivity (DC) in which the wireless device 18 is simultaneously connected to two different radio network nodes, or to two different cells served by two different radio network nodes. In this case, the wireless device 18 may be configured with a so-called master cell group (MCG) and a secondary cell group (SCG). Here, the MCG includes one or more cells served by the radio network node acting as a master node, i.e., a group of serving cells associated with the master node. The MCG may include a primary cell and optionally one or more secondary cells. The primary cell of the MCG is referred to as a PCell. The SCG includes one or more cells served by the radio network node acting as a secondary node, i.e., a group of serving cells associated with the secondary node. The SCG may include a primary cell and optionally one or more secondary cells. The primary cell of the SCG is referred to as the PSCell.

The master node may be a master in the sense that it controls the secondary node. Alternatively or additionally, the master node may be a master in the sense that it is a radio access node that provides the control plane connection for the wireless device 18 to the core network, whereas the secondary node lacks a control plane connection for the wireless device 18 to the core network.

Different types of dual connectivity may be employed by different embodiments. In some embodiments, the wireless device 18 operates with E-UTRA-NR (EN) DC, where the master node uses E-UTRA and the secondary node uses NR. In other embodiments, the wireless device 18 operates with NR-E-UTRA (NE) DC, where the master node uses NR and the secondary node uses E-UTRA. Generally, though, the wireless device 18 in some embodiments operates with multi-radio (MR) DC, which refers to dual connectivity between E-UTRA and NR nodes, or between two NR nodes. MR-DC therefore may be seen as a generalization of Intra-U-UTRA DC, where a multiple receiver/transmitter capable device is configured to utilize resources provided by two different nodes connected via a non-ideal backhaul, one providing NR access and the other providing either E-UTRA or NR access. Regardless, in MR-DC, the wireless device 18 may have a single RRC state, based on the master node RRC and a single control plane connection towards the core network. RRC protocol data units (PDUs) generated by the secondary node can be transmitted via the master node to the wireless device 18.

In some embodiments, the network 10 controls at least some aspects of configuration of the wireless device 18. The network 10 in this regard may transmit to the wireless device 18 a configuration, e.g., an RRC configuration or RRC reconfiguration, that, when applied (i.e., executed) by the wireless device 18, configures the device 18 in a certain way. The configuration may for instance be a mobility configuration that configures the wireless device 18 to use certain cell(s) to access the network 10. In some embodiments, a mobility configuration may for example configure the wireless device 18 to perform a switch from accessing the network 10 via one cell to accessing the system via another cell, e.g., in connected mode. In some embodiments, this switch may be a handover. In other embodiments, a configuration may configure the wireless device 18 to use more or less links to access the network 10, e.g., in the context of dual connectivity, carrier aggregation, or the like. For example, the configuration may be a configuration for adding or changing a secondary cell group (SCG) or a secondary cell, e.g., the configuration may be a PSCell change or addition configuration. In still other embodiments, the configuration may be a configuration for resuming a connection, e.g., an RRC connection resume, for a reconfiguration with sync, for a reconfiguration, for a reestablishment, or the like.

According to embodiments herein, though, the network 10 may transmit the configuration to the wireless device 18 but indicate that the wireless device 18 is to only conditionally apply that configuration. In this sense, then, the network 10 may transmit to the wireless device 18 a so-called conditional configuration 16 that is a configuration that the wireless device 18 is to conditionally apply. The wireless device 18 in this case stores the conditional configuration at the wireless device 18, monitors for if or when a condition is fulfilled while the conditional configuration is stored, and then applies the conditional configuration upon the fulfillment of a condition. For example, a PSCell change configuration that the wireless device 18 is to conditionally apply may be referred to as a conditional PSCell change (CPC). The wireless device 18 in such an example stores the PSCell change configuration and selectively applies the PSCell change upon fulfillment of a condition.

In the context of multi-connectivity, different radio network nodes may configure the wireless device 18. For example, the first radio network node 12A may transmit to the wireless device 18 a conditional configuration related to the first cell group 14A and/or the second radio network node 12B may transmit to the wireless device 18 a conditional configuration related to the second cell group 14B. In some embodiments, this is done without coordination or interaction between the first radio network node 12A and the second radio network node 12B, e.g., such that the first radio network node 12A may not have inherent knowledge about a conditional configuration that the second radio network node 12B transmits to the wireless device 18, and vice versa.

According to some embodiments herein, the wireless device 18 nonetheless informs a radio network node about a conditional configuration stored at the wireless device 18 in certain circumstances or contexts. This way, a radio network node that would not otherwise know about that conditional configuration at the wireless device 18 (e.g., because the radio network node did not transmit that conditional configuration to the wireless device 18) may exploit knowledge of the conditional configuration for any number of purposes or actions, e.g., more efficient control signaling to the wireless device 18, avoidance of unnecessary procedures or signaling, or the like.

In some embodiments, for example, the wireless device 18 informs a radio network node about a conditional configuration stored at the wireless device 18 when the wireless device 18 reports a failure associated with a cell group in multi-connectivity operation. Figure 1 in this regard shows that the wireless device 18 transmits a cell group failure report 20, e.g., to the first or second radio network node 12A, 12B. The cell group failure report 20 reports a failure associated with a first cell group 14A among the multiple cell groups 14A, 14B. The report 20 includes conditional configuration information 22. The information 22 may include information indicating whether a conditional configuration is stored at the wireless device 18 and/or information about a conditional configuration 16 stored at the wireless device 18. Regardless, the radio network node that receives the report 20 (e.g., the first or second radio network node 12A, 12B) may exploit the report 20 for any number of actions. For example, the radio network node may transmit to the wireless device 18 delta signaling relative to the conditional configuration stored at the wireless device 18, e.g., so as to increase the efficiency of signaling as compared to without knowledge of the conditional configuration at the wireless device 18. Alternatively or additionally, the radio network node may modify or release the conditional configuration stored at the wireless device 18, and/or trigger a procedure for preparing a target candidate for SCG addition or MCG addition.

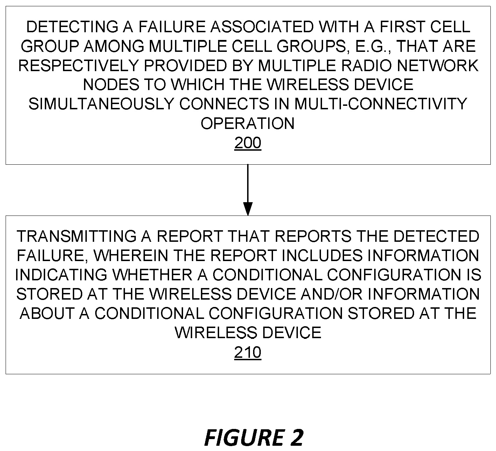

More particularly, according to some embodiments herein, Figure 2 depicts a method performed by the wireless device 18 in accordance with the claimed invention. The method includes detecting a failure associated with the first cell group 14A among multiple cell groups 14A, 14B, e.g., that are respectively provided by multiple radio network nodes 12A, 12B to which the wireless device 18 simultaneously connects in multi-connectivity operation (Block 200). The method further includes transmitting a report 20 that reports the detected failure (Block 210). The report 20 includes information 22. The information 22 may include information indicating whether a conditional configuration is stored at the wireless device 18 and/or information about a conditional configuration 16 stored at the wireless device 18.

In some embodiments, the information 22 about a conditional configuration 16 stored at the wireless device 18 includes information identifying a cell or frequency for which the wireless device 18 has a conditional configuration 16 stored. For example, the information 22 may include a physical cell identity (PCI) per target cell candidate for which the wireless device 18 has a stored PSCell change configuration. As another example, the information may include downlink frequency information for the cells for which the wireless device 18 has a stored PSCell change configuration. The cell / frequency information may be retrieved from the reconfigurationWithSync that is within the stored RRCReconfiguration (more specifically from the spCellConfigCommon within the ReconfigurationWithSync).

In some embodiments, the information 22 about a conditional configuration 16 stored at the wireless device 18 includes information about a trigger condition on which the conditional configuration 16 depends. For example, the information about the trigger condition may include one or more of: information identifying or describing the trigger condition; whether the trigger condition has been fulfilled; or how close the trigger condition was to being fulfilled (e.g., in terms of radio conditions) when the failure was detected. Alternatively or additionally, the information 22 may indicate whether at least one condition for the conditional configuration 16 has been fulfilled or not, which condition has been fulfilled or not, and/or how far the condition(s) were to being fulfilled (e.g., in terms of radio conditions).

In some embodiments, the information 22 about a conditional configuration 16 stored at the wireless device 18 includes information describing a measurement performed while monitoring for fulfillment of a trigger condition for triggering application of the conditional configuration 16. In these and other embodiments, measurements may comprise cell measurements (e.g., cell Reference Signal Received Power (RSRP)) and/or beam measurements (e.g., Synchronization Signal Block (SSB) RSRP, SSB Reference Signal Received Quality (RSRQ), SSB signal-to-interference-plus-noise-ratio (SINR), Channel State Information Reference Signal (CSI-RS) RSRP, CSI-RS RSRQ, CSI-RS SINR, etc.). Regardless, the information 22 about a conditional configuration 16 stored at the wireless device 18 may further include information indicating that a cell on which the measurement was performed is a cell for which the wireless device 18 has a stored conditional configuration. For example, the information 22 may include a flag to indicate that a stored conditional PSCell change/addition is available. This may be provided as a list of cells for which the wireless device 18 has stored conditional PSCell change configuration(s), possibly including the previously described information per cell like cell identifier, frequency, etc.

In some embodiments, the conditional configuration 16 is a conditional PSCell change or addition configuration that conditionally configures a change to or addition of a PSCell for the device's multi-connectivity operation. Here, a PSCell is a primary cell of a secondary cell group included in the multiple cell groups 14A, 14B. In one such embodiment, the method further comprises receiving the conditional PSCell change or addition configuration from the secondary cell group.

In other embodiments, the conditional configuration 16 is a conditional PCell change or addition configuration that conditionally configures a change to or addition of a PCell for the device's multi-connectivity operation. Here, a PCell is a primary cell of a master cell group included in the multiple cell groups. In this case, the method may further comprise receiving the conditional PCell change or addition configuration from the master cell group.

In some embodiments, the conditional configuration 16 is a conditional mobility configuration. For example, the conditional mobility configuration may be a conditional handover configuration or a conditional resume configuration. In some embodiments, the method further comprises receiving the conditional mobility configuration from a master cell group included in said multiple cell groups.

In some embodiments, the first cell group is a secondary cell group included in the multiple cell groups 14A, 14B, e.g., such that the report 20 is an SCGFailureInformation report. In other embodiments, the first cell group is a master cell group included in the multiple cell groups 14A, 14B, e.g., such that the report 20 is an MCGFailurelnformation report.

In some embodiments, the report 20 is transmitted to: a second cell group that is included in the multiple cell groups and that is different than the first cell group; or a second radio network node that is included in the multiple radio network nodes and that provides the second cell group, wherein a first radio network node provides the first cell group. In one such embodiment, the first cell group is a secondary cell group included in said multiple cell groups, wherein the second cell group is a master cell group included in said multiple cell groups, and wherein the second radio network node is a master node. In another embodiment, the first cell group is a master cell group included in said multiple cell groups, wherein the second cell group is a secondary cell group included in said multiple cell groups, and wherein the second radio network node is a secondary node.

In some embodiments, the conditional configuration 16 is a conditional reconfiguration.

In some embodiments, the conditional configuration is a conditional Radio Resource Control, RRC, configuration or a conditional RRC reconfiguration.

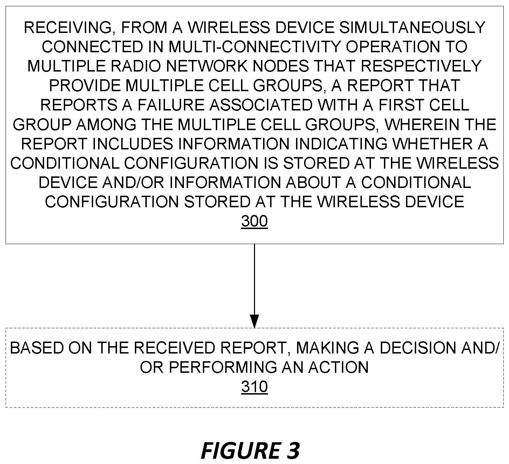

Figure 3 depicts a method performed by a radio network node 12 (e.g., radio network node 12A or 12B) in accordance with the claimed invention. The method includes receiving, from a wireless device 18 simultaneously connected in multi-connectivity operation to multiple radio network nodes 12A, 12B that respectively provide multiple cell groups 14A, 14B, a report 20 that reports a failure associated with a first cell group 14A among the multiple cell groups 14A, 14B (Block 300). The report 20 includes information 22. The information 22 includes information indicating whether a conditional configuration 16 is stored at the wireless device 18 and/or information about a conditional configuration 16 stored at the wireless device 18.

In some embodiments, the information 22 about a conditional configuration 16 stored at the wireless device 18 includes information identifying a cell or frequency for which the wireless device 18 has a conditional configuration 16 stored. For example, the information 22 may include a physical cell identity (PCI) per target cell candidate for which the wireless device 18 has a stored PSCell change configuration. As another example, the information may include downlink frequency information for the cells for which the wireless device 18 has a stored PSCell change configuration. The cell / frequency information may be retrieved from the reconfigurationWithSync that is within the stored RRCReconfiguration (more specifically from the spCellConfigCommon within the ReconfigurationWithSync).

In some embodiments, the information 22 about a conditional configuration 16 stored at the wireless device 18 includes information about a trigger condition on which the conditional configuration 16 depends. For example, the information about the trigger condition may include one or more of: information identifying or describing the trigger condition; whether the trigger condition has been fulfilled; or how close the trigger condition was to being fulfilled (e.g., in terms of radio conditions) when the failure was detected. Alternatively or additionally, the information 22 may indicate whether at least one condition for the conditional configuration 16 has been fulfilled or not, which condition has been fulfilled or not, and/or how far the condition(s) were to being fulfilled (e.g., in terms of radio conditions).

In some embodiments, the information 22 about a conditional configuration 16 stored at the wireless device 18 includes information describing a measurement performed while monitoring for fulfillment of a trigger condition for triggering application of the conditional configuration 16. In these and other embodiments, measurements may comprise cell measurements (e.g., cell Reference Signal Received Power (RSRP)) and/or beam measurements (e.g., Synchronization Signal Block (SSB) RSRP, SSB Reference Signal Received Quality (RSRQ), SSB signal-to-interference-plus-noise-ratio (SINR), Channel State Information Reference Signal (CSI-RS) RSRP, CSI-RS RSRQ, CSI-RS SINR, etc.). Regardless, the information 22 about a conditional configuration 16 stored at the wireless device 18 may further include information indicating that a cell on which the measurement was performed is a cell for which the wireless device 18 has a stored conditional configuration. For example, the information 22 may include a flag to indicate that a stored conditional PSCell change/addition is available. This may be provided as a list of cells for which the wireless device 18 has stored conditional PSCell change configuration(s), possibly including the previously described information per cell like cell identifier, frequency, etc.

In some embodiments, the conditional configuration 16 is a conditional PSCell change or addition configuration that conditionally configures a change to or addition of a PSCell for the device's multi-connectivity operation. Here, a PSCell is a primary cell of a secondary cell group included in the multiple cell groups 14A, 14B. In one such embodiment, the conditional PSCell change or addition configuration may be from the secondary cell group.

In other embodiments, the conditional configuration 16 is a conditional PCell change or addition configuration that conditionally configures a change to or addition of a PCell for the device's multi-connectivity operation. Here, a PCell is a primary cell of a master cell group included in the multiple cell groups. In this case, the conditional PCell change or addition configuration may be from the master cell group.

In some embodiments, the conditional configuration 16 is a conditional mobility configuration. For example, the conditional mobility configuration may be a conditional handover configuration or a conditional resume configuration. In some embodiments, the conditional mobility configuration is from from a master cell group included in said multiple cell groups.

In some embodiments, the first cell group is a secondary cell group included in the multiple cell groups 14A, 14B, e.g., such that the report 20 is an SCGFailureInformation report. In other embodiments, the first cell group is a master cell group included in the multiple cell groups 14A, 14B, e.g., such that the report 20 is an MCGFailurelnformation report.

In some embodiments, the radio network node is included in the multiple radio network nodes and is the radio network node 12B that provides the second cell group 14B. In one such embodiment, the first cell group 14A is a secondary cell group included in said multiple cell groups, wherein the second cell group 15B is a master cell group included in said multiple cell groups, and wherein the radio network node 12B is a master node. In another embodiment, the first cell group is a master cell group included in said multiple cell groups, wherein the second cell group is a secondary cell group included in said multiple cell groups, and wherein the radio network node 12B is a secondary node.

In some embodiments, the conditional configuration 16 is a conditional reconfiguration.

In some embodiments, the conditional configuration is a conditional Radio Resource Control, RRC, configuration or a conditional RRC reconfiguration.

Regardless, in some embodiments, the method further comprises, based on the received report 20, making a decision and/or performing an action (Block 310). For example, in some embodiments, the method further comprises: based on the received report, deciding whether to add, modify, or release the conditional configuration; and adding, modifying, or releasing the conditional configuration depending on said deciding. Alternatively or additionally, the method may further comprise, based on the received report, deciding whether to trigger a procedure for preparing a target candidate for secondary cell group addition or master cell group addition. Alternatively or additionally, the method may further comprise, based on the received report, transmitting to the wireless device delta signaling relative to the conditional configuration.

Note that the above description has generally referred to a "configuration" as any configuration that the wireless device is to apply, be it the initial configuration or a subsequent configuration that is a reconfiguration to replace a previous configuration

Embodiments herein also include corresponding apparatuses. Embodiments herein for instance include a wireless device 18 configured to perform any of the steps of any of the embodiments described above for the wireless device 18.

Embodiments also include a wireless device 18 comprising processing circuitry and power supply circuitry. The processing circuitry is configured to perform any of the steps of any of the embodiments described above for the wireless device 18. The power supply circuitry is configured to supply power to the wireless device 18.

Embodiments further include a wireless device 18 comprising processing circuitry. The processing circuitry is configured to perform any of the steps of any of the embodiments described above for the wireless device 18. In some embodiments, the wireless device 18 further comprises communication circuitry.

Embodiments further include a wireless device 18 comprising processing circuitry and memory. The memory contains instructions executable by the processing circuitry whereby the wireless device 18 is configured to perform any of the steps of any of the embodiments described above for the wireless device 18.

Embodiments moreover include a user equipment (UE). The UE comprises an antenna configured to send and receive wireless signals. The UE also comprises radio front-end circuitry connected to the antenna and to processing circuitry, and configured to condition signals communicated between the antenna and the processing circuitry. The processing circuitry is configured to perform any of the steps of any of the embodiments described above for the wireless device 18. In some embodiments, the UE also comprises an input interface connected to the processing circuitry and configured to allow input of information into the UE to be processed by the processing circuitry. The UE may comprise an output interface connected to the processing circuitry and configured to output information from the UE that has been processed by the processing circuitry. The UE may also comprise a battery connected to the processing circuitry and configured to supply power to the UE.

Embodiments herein also include a radio network node 12A, 12B configured to perform any of the steps of any of the embodiments described above for the radio network node 12A, 12B.

Embodiments also include a radio network node 12A, 12B comprising processing circuitry and power supply circuitry. The processing circuitry is configured to perform any of the steps of any of the embodiments described above for the radio network node 12A, 12B. The power supply circuitry is configured to supply power to the radio network node 12A, 12B.

Embodiments further include a radio network node 12A, 12B comprising processing circuitry. The processing circuitry is configured to perform any of the steps of any of the embodiments described above for the radio network node 12A, 12B. In some embodiments, the radio network node 12A, 12B further comprises communication circuitry.

Embodiments further include a radio network node 12A, 12B comprising processing circuitry and memory. The memory contains instructions executable by the processing circuitry whereby the radio network node 12A, 12B is configured to perform any of the steps of any of the embodiments described above for the radio network node 12A, 12B.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

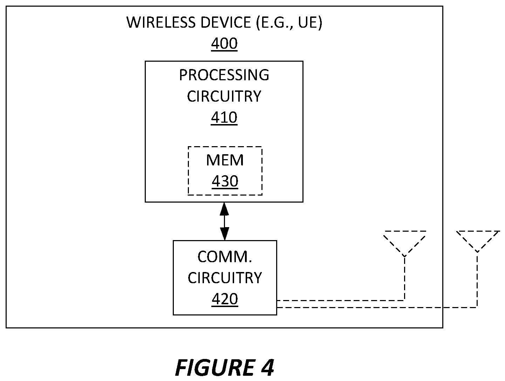

Figure 4 for example illustrates a wireless device 400 (e.g., wireless device 18) as implemented in accordance with one or more embodiments. As shown, the wireless device 400 includes processing circuitry 410 and communication circuitry 420. The communication circuitry 420 (e.g., radio circuitry) is configured to transmit and/or receive information to and/or from one or more other nodes, e.g., via any communication technology. Such communication may occur via one or more antennas that are either internal or external to the wireless device 400. The processing circuitry 410 is configured to perform processing described above, e.g., in Figure 2, such as by executing instructions stored in memory 430. The processing circuitry 410 in this regard may implement certain functional means, units, or modules.

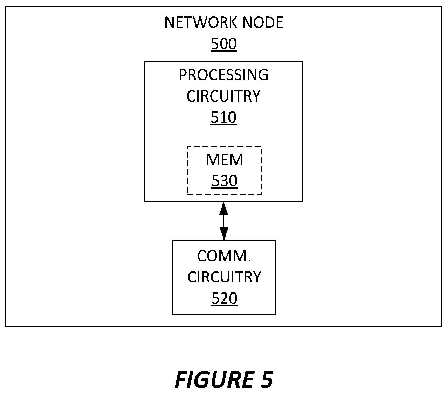

Figure 5 illustrates a network node 500 (e.g., radio network node 12A or 12B) as implemented in accordance with one or more embodiments. As shown, the network node 500 includes processing circuitry 510 and communication circuitry 520. The communication circuitry 520 is configured to transmit and/or receive information to and/or from one or more other nodes, e.g., via any communication technology. The processing circuitry 510 is configured to perform processing described above, e.g., in Figure 3, such as by executing instructions stored in memory 530. The processing circuitry 510 in this regard may implement certain functional means, units, or modules.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described. In the below, the wireless device 18 may be exemplified as a UE. A master node above is exemplified as a Master Node (MN) in terms of 3GPP standards, a secondary node is exemplified as a Secondary Node (SN) in terms of 3GPP standards, a master cell group is exemplified as a Master Cell Group (MCG) in terms of 3GPP standards, and a secondary cell group is exemplified as a Secondary Cell Group (SCG) in terms of 3GPP standards. Also, multi-connectivity operation is exemplified in terms of MR-DC.

Some embodiments herein are applicable to solutions for enhancing mobility, e.g., in LTE and NR. Some embodiments in particular are applicable in conjunction with solutions to improve the robustness at handover and to decrease the interruption time at handover.

One solution to increase mobility robustness in NR is called "conditional handover" or "early handover command". In order to avoid the undesired dependence on the serving radio link upon the time (and radio conditions) where the UE should execute the handover, the possibility to provide RRC signaling for the handover to the UE earlier is provided. To achieve this, it is possible to associate the HO command with a condition, e.g. based on radio conditions possibly similar to the ones associated to an A3 event, where a given neighbour becomes X db better than target. As soon as the condition is fulfilled, the UE executes the handover in accordance with the provided handover command.

Such a condition could e.g. be that the quality of the target cell or beam becomes X dB stronger than the serving cell. The threshold Y used in a preceding measurement reporting event should then be chosen lower than the one in the handover execution condition. This allows the serving cell to prepare the handover upon reception of an early measurement report and to provide the *RRCConnectionReconfiguration* with *mobilityControlInfo* at a time when the radio link between the source cell and the UE is still stable. The execution of the handover is done at a later point in time (and threshold) which is considered optimal for the handover execution.

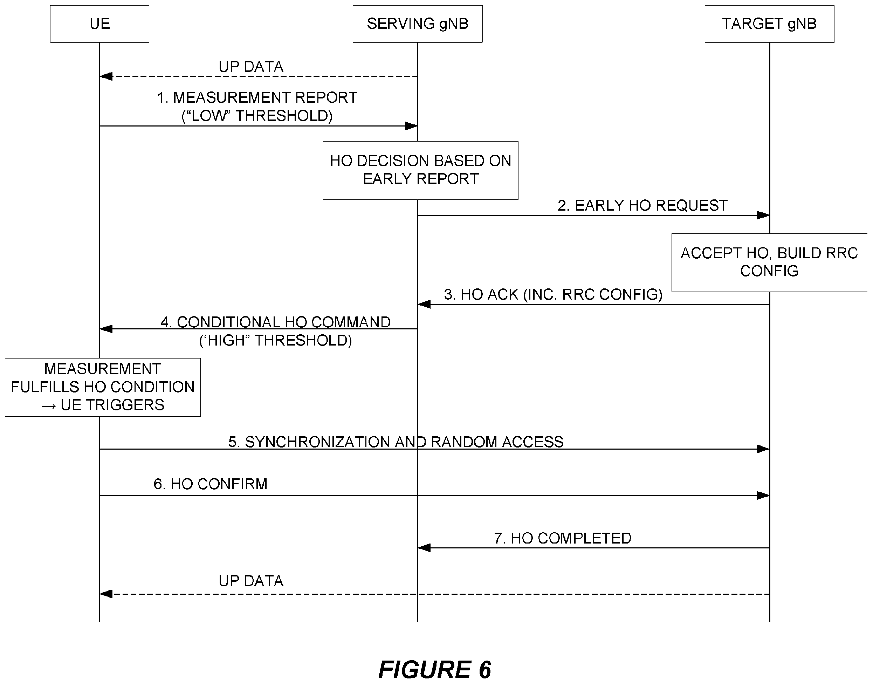

Figure 6 depicts an example with just a serving cell and a target cell. In practice there may often be many cells or beams that the UE reported as possible candidates based on its preceding radio resource management (RRM) measurements. The network should then have the freedom to issue conditional handover commands for several of those candidates. The RRCConnectionReconfiguration for each of those candidates may differ, e.g. in terms of the HO execution condition (reference signal, RS, to measure and threshold to exceed) as well as in terms of the random access (RA) preamble to be sent when a condition is met.

While the UE evaluates the condition, it should continue operating per its current RRC configuration, i.e., without applying the conditional HO command. When the UE determines that the condition is fulfilled, it disconnects from the serving cell, applies the conditional HO command and connects to the target cell. These steps are equivalent to the current, instantaneous handover execution.

More particularly, in Figure 6, the serving gNB may send user plane (UP) data to the UE. In step 1, the UE sends a measurement report with a "low" threshold to the serving gNB. The serving gNB makes a handover (HO) decision based on this early report. In step 2, the serving gNB sends an early HO request to a target gNB. The target gNB accepts the HO request and builds an RRC configuration. The target gNB returns a HO acknowledgement, including the RRC configuration, to the serving gNB in step 3. In step 4, a conditional HO command with a "high" threshold is sent to the UE. Subsequently, measurements by the UE may fulfil the HO condition of the conditional HO command. The UE thus triggers the pending conditional handover. The UE performs synchronization and random access with the target gNB in step 5, and HO confirm is sent in step 6. In step 7, the target gNB informs the serving gNB that HO is completed. The target gNB may then send user plane (UP) data to the UE.

In a conditional handover (CHO), then a UE has a network configuration for initiating access to a target cell based on configuration condition(s). Usage of conditional handover is decided by the network. The UE evaluates when the condition is valid. The baseline operation for Conditional HO procedure assumes HO command type of message contains HO triggering condition(s) and dedicated RRC configuration(s). The UE accesses the prepared target when the relevant condition is met. The baseline operation for Conditional HO assumes the source RAN remains responsible for RRC until the UE successfully sends RRC Reconfiguration Complete message to target RAN. Cell level quality and/or beam level quality may be used as baseline for CHO execution condition. Ax events (entry condition) are used for CHO execution condition and A3/5 as baseline. Trigger quantity for CHO execution condition(RSRP, RSRQ or RS-SINR) is configured by network.

Some embodiments herein are usable for such a conditional handover, such that a conditional handover configuration is one example of the conditional configuration 16 in Figure 1. An example of a Conditional Handover configuration per target cell candidate, using ASN.1 notion, is shown below:

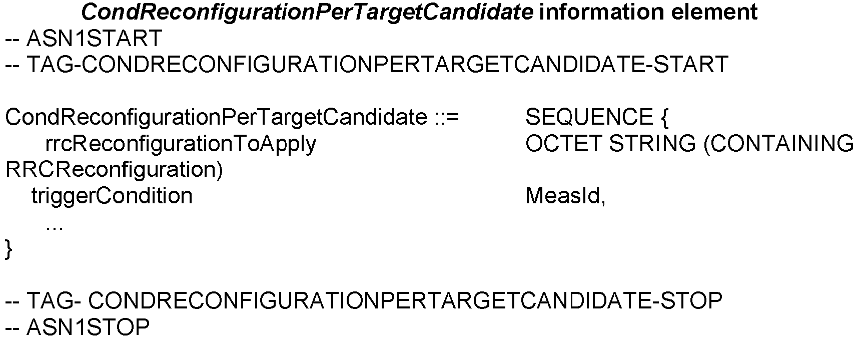

Alternatively or additionally, some embodiments herein are usable for a conditional PSCell addition and Conditional PSCell change configurations, as other examples of the conditional configuration 16 in Figure 1. These conditional configurations may be configured using the same *RRCReconfiguration* message provided in a container during CHO configuration per target candidate e.g. in an OCTET STRING. And, in MR-DC operation, the UE could distinguish conditional handovers, conditional PSCell changes and additions based on the fields/IEs included in the *RRCReconfiguration* e.g. *secondaryCellGroup* of IE CellGroupConfig containing a *reconfigurationWithSync* as an indication of a PSCell addition, if no other PSCell is configured.

Even though other events in addition to A3/A5 agreed for CHO may be needed to support PSCell addition/change, the principle of having a reference via a measld (or list of measld(s), if network wants to configure multiple triggers) to the VarMeasConfig is still applicable. Hence, the same signalling structure per target candidate used to configure CHO may be re-used to configure Conditional PSCell addition and Conditional PSCell change.

### SCG failure handling

In some embodiments, a UE operating in Multi-Radio Dual Connectivity (MR-DC) is required to perform radio link monitoring in each SpCell i.e. in the PCell (i.e. SpCell of the Master Cell Group - MCG) and in the PSCell (i.e. SpCell of the Secondary Cell Group - SCG).

Hence, the UE may detect an SCG radio link failure (RLF), which leads to the transmission of an SCG failure report including a failure type and measurement results. That aims to assist the Master Node (MN) and/or Secondary Node (SN) to select a new target candidate for SCG addition and/or to indicate what caused the failure (so that is possibly avoided in future e.g. by making event triggered settings more conservative, to avoid too late SCG changes).

In particular, a UE shall perform the following upon T310 expiry in PSCell, or upon random access problem indication from SCG MAC, or upon indication from SCG Radio Link Control (RLC) that the maximum number of retransmissions has been reached. If the indication is from SCG RLC and carrier aggregation (CA) duplication is configured and activated; and for the corresponding logical channel *allowedServingCells* only includes SCell(s): initiate the failure information procedure to report RLC failure. Else, the UE is to consider radio link failure to be detected for the SCG, i.e. SCG RLF, and initiate the SCG failure information procedure to report SCG radio link failure.

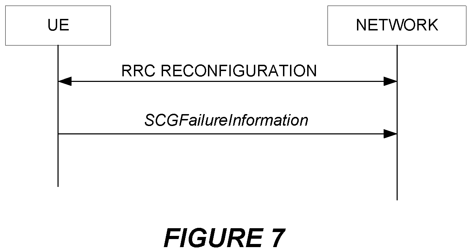

Figure 7 shows the SCG failure information procedure. The purpose of this procedure is to inform E-UTRAN or NR master node (MN) about an SCG failure the UE has experienced i.e. SCG radio link failure, failure of SCG reconfiguration with sync, SCG configuration failure for RRC message on signaling radio bearer #3 (SRB3) and SCG integrity check failure.

A UE initiates the procedure to report SCG failures when SCG transmission is not suspended and when one of the following conditions is met: (i) upon detecting radio link failure for the SCG; (ii) upon reconfiguration with sync failure of the SCG; (iii) upon SCG configuration failure; (iv) upon integrity check failure indication from SCG lower layers concerning SRB3.

Upon initiating the procedure, the UE shall suspend SCG transmission for all SRBs and DRBs, reset SCG MAC, and stop T304, if running. If the UE is in (NG)EN-DC, the UE shall initiate transmission of the *SCGFailureInformationNR* message. Else, the UE shall initiate transmission of the *SCGFailureInformation* message.

The SCG failure recovery solution may be extended to MCG failure recovery. MCG fast recovery targets all MRDC architecture options. When MCG failure occurs, UE follows SCG failure-like procedure: UE does not trigger RRC connection re-establishment, and UE triggers an MCG failure procedure in which a failure information message is transmitted to the network via SCG.

MCG failure indication should include: available measurement results of MCG, MCG link failure cause, available measurement results of SCG, and available measurement results of non-serving cells. An RRC message MCGFailurelnformation is used for MCG failure indication.

Once the MCG failure indication is triggered, the UE shall transmit the MCG failure indication, suspend MCG transmission for all SRBs and DRBs, reset MCG-MAC, maintain the current measurement configurations from both the MN and the SN, and continue measurements based on configuration from the MN and the SN if possible.

Upon sending an MCG failure indication, the UE starts a timer. Upon resumption of MCG, UE stops the timer. Upon expiry of the timer, UE initiates RRC connection re-establishment procedure.

Some embodiments address certain challenge(s) in these contexts. As described above, the UE may be configured with conditional PSCell change / addition configurations (e.g. configured on the SCG) or conditional handover configurations (e.g. configured on the MCG), which comprises at least one measld and an *RRCReconfiguration* in an OCTET STRING per target candidate. And, as the UE may be operating in MR-DC, the UE may detect an SCG failure and upon detecting the failure, the UE transmits an SCG Failure report to the MN including information such as failure type and measurements. These may assist the MN and/or SN to take further actions such as configuring the UE to add a new SCG, reconfiguring the existing SCG, releasing the previously configured SCG (as the UE still keeps the SCG configurations upon failure), etc.

Similarly, the UE may be configured with conditional handover configurations (e.g. configured on the MCG) or conditional PSCell change / addition configurations (e.g. configured on the SCG), or which comprises at least one measld and an *RRCReconfiguration* in an OCTET STRING per target candidate. And, as the UE may be operating in MR-DC, the UE may detect an MCG failure and upon detecting the failure, the Rel-16 behaviour defines that the UE transmits an MCG Failure report to the MN including information such as failure type and measurements. These may assist the MN and/or SN to take further actions such as configuring the UE to add a new MCG, reconfiguring the existing MCG, etc.

One problem addressed by some embodiments herein is the fact that the MN would otherwise not be aware that the UE has stored PSCell change configurations as these may have been configured on the SCG i.e. an *RRCReconfiguration* with *reconfigurationWithSync* for a *secondaryCellGroup,* possibly received via the SN and not necessarily informed to the MN. Indeed, in the same way as an MN does not need to be aware of inter-cell mobility within the SN (inter-cell/intra-node, without key refresh), an MN receiving an SCG failure report does not need to be aware of conditional inter-cell mobility within the SN (inter-cell/intra-node, without key refresh), i.e., conditional PSCell change configuration for target candidates within the same SN the UE is connected to. Hence, as the MN would otherwise not be aware of that, it may not use that fact e.g. to apply delta signalling on these conditional reconfigurations, or even to remove these configurations, if the MN does not want the UE to keep using them. The MN would not know that there may be cells already prepared for receiving that UE and that the MN could unnecessarily trigger a new procedure for preparing a target candidate for SCG addition. Another possible action the MN could take, without the knowledge concerning the conditional PSCell configurations available at the UE, is to unnecessarily release the SCG configuration at the UE, even though it is actually ambiguous whether the conditional PSCell change configurations would also be released. In addition to it, the MN would not be aware of the situation concerning conditional handover configurations e.g. how close to the trigger/execution point the UE is.

Note: It could be argued that this would be mainly problematic in the case conditional PSCell change configurations are configured via Signaling Radio Bearer #3 (SRB3). However, it may also be useful in case this is configured via Signaling Radio Bearer #1 (SRB1). In that case, the SN could prepare conditional PSCell change configuration(s) and send it to the MN via RRC Transfer. The MN would then forward the message transparently to the UE via SRB1and the MN would not necessarily be aware of the content of configurations prepared by the SN.

Note: It could also be argued that this lack of information exists mainly in the case of target candidates for PSCell change in the same SN as the UE is connected to, otherwise the MN may need to be involved for the computation of security keys of potential target cells for conditional PSCell change. In addition, normal SN change (non-conditional SN change) always involves signalling via the MN over SRB1 as it is the MN which contacts the target SNs to request SN addition. Hence, the problem is generally applicable at least for this intra-SN conditional PSCell change.

So in a way, in the same way as the SN may trigger an intra-SN inter-cell PSCell change (as shown in the figure below) without MN involvement, the SN may configure a conditional inter-cell PSCell change without MN involvement, so that the MN would not otherwise be aware of the UE's configured conditional PSCell change configurations when an SCG failure occurs.

Similarly, the SN that possibly receives an MCG Failure report would not otherwise be aware that the UE has stored conditional handover configurations as these may have been configured on the MCG i.e. an *RRCReconfiguration* with *reconfigurationWithSync* for a *masterCellGroup,* possibly received via the MN and not necessarily informed to the SN. Hence, as the SN would not otherwise be aware of that it may not use that fact e.g. to apply delta signalling on these conditional reconfigurations, or even to remove these configurations, if the SN does not want the UE to keep using them. The SN would not otherwise know that there may be cells already prepared for receiving that UE and could unnecessarily trigger a new procedure for preparing a target candidate for MCG addition. Another possible action the SN could take, without the knowledge concerning the conditional handover configurations available at the UE, is to unnecessarily release the MCG configuration at the UE, even though it is actually ambiguous whether the conditional handover configurations would also be released. In addition to it, the SN would not otherwise be aware of the situation concerning conditional PSCell change configurations e.g. how close to the trigger/execution point the UE is.

Certain aspects of the present disclosure and their embodiments may provide solutions to these or other challenges. Some embodiments include in an SCG failure report information regarding the availability of stored RRCReconfiguration(s) for PSCell change and/or other related information e.g. measurements, which conditions have been fulfilled if any, etc. That is, a UE may include in the SCG failure report information on stored conditional PSCell configuration(s).

### Embodiment A

One embodiment comprises a method at a wireless terminal (also called a User Equipment - UE) the method comprising: (i) detecting an SCG failure while operating in MR-DC and determining that it has stored conditional PSCell change/addition configuration(s) e.g. configured on the SCG; and (ii) transmitting an SCG failure report including in the report. In some embodiments, the report includes information related to the stored conditional PSCell change/addition configuration(s) e.g. configured on the SCG.

### Embodiment B

Another embodiment comprises a method at a wireless terminal (also called a User Equipment - UE) the method comprising: (i) detecting an SCG failure while operating in MR-DC and determining that it has stored conditional PCell change/addition configuration(s) or conditional handover configuration(s) e.g. configured on the MCG; and (ii )transmitting an SCG failure report including in the report. In some embodiments, the report includes information related to the stored conditional PCell change/addition configuration(s) and/or conditional handover e.g. configured on the MCG.

### Embodiment C

Yet another embodiment comprises a method at a wireless terminal (also called a User Equipment - UE) the method comprising: (i) detecting an MCG failure while operating in MR-DC and determining that it has stored conditional PCell change/addition configuration(s) and/or conditional handover configuration(s) e.g. configured on the MCG; and (ii) transmitting an MCG failure report including in the report. In some embodiments, the report includes information related to the stored conditional PCell change/addition configuration(s) and/or conditional handover e.g. configured on the MCG.

### Embodiment D

Still another embodiment comprises a method at a wireless terminal (also called a User Equipment - UE) the method comprising: (i) detecting an MCG failure while operating in MR-DC and determining that it has stored conditional PSCell change/addition configuration(s) e.g. configured on the SCG; and (ii) transmitting an MCG failure report including in the report. In some embodiments, the report includes information related to the stored conditional PSCell change/addition configuration(s) e.g. configured on the SCG.

### Embodiment E

A network-side embodiment comprises a method at a network node (also called a gNodeB). The method comprises receiving an SCG failure report containing in the report at least one of the following: (a) information related to the stored conditional PSCell change/addition configuration(s) e.g. configured on the SCG; and (b) information related to the stored conditional handover configuration(s) e.g. configured on the MCG. The method also comprises, based on that, deciding at least one of the following: (a) release an SCG, add an SCG and/or modify an SCG; (b) modify, add or release conditional PSCell configuration(s) configured on the SCG; and (c) modify, add or release conditional handover configuration(s) configured on the MCG;

### Embodiment F

Another network-side embodiment comprises a method at a network node (also called a gNodeB). The method comprises receiving an MCG failure report containing in the report at least one of the following: (a) information related to the stored conditional handover configuration(s) e.g. configured on the MCG; and (b) information related to the stored conditional PSCell change/addition configuration(s) e.g. configured on the SCG. The method also comprises, based on that, deciding at least one of the following: (a) release an SCG, add an SCG and/or modify an SCG (i.e. providing to the UE a *RRCReconfiguration* message comprising SCG configurations or indication(s) to release the SCG); (b) modify, add or release conditional PSCell configuration(s) configured on the SCG (i.e. providing to the UE a RRCReconfiguration message comprising conditional PSCell configurations or indication(s) to release stored conditional PSCell configurations); (c) modify, add or release conditional handover configuration(s) configured on the MCG (i.e. providing to the UE a RRCReconfiguration message comprising conditional handover configurations or indication(s) to release stored conditional handover configurations; (d) perform a handover for the UE (i.e. providing to the UE a RRCReconfiguration message comprising configurations to perform a handover); and (e) upon detecting a cell group failure (MCG or SCG), reporting information related to conditional reconfiguration (e.g. conditional PSCell change/addition and/or conditional handover) stored at the UE.

Certain embodiments may provide one or more of the following technical advantage(s). One advantage of reporting conditional PSCell addition/change and/or conditional handover information in an SCG failure or MCG failure report may be that it provides more assistance to the network to take further actions upon reception of an SCG failure or MCG failure report, such as whether it should release the conditional PSCell change configurations and/or CHO configurations, resume the SCG operation, resume the monitoring of trigger/execution conditions for the stored configurations, etc. That may alternatively or additionally enable a reduction in terms of signaling over the air interface e.g. if the network decides to resume the monitoring of the trigger/execution conditions for the stored conditional PSCell addition/change and/or conditional handover.

The term handover or reconfiguration with sync may be used herein with a similar meaning. Hence, a conditional handover may also be called a conditional reconfiguration with sync. In NR terminology, the handovers are typically called an RRCReconfiguration with a reconfigurationWithSync (field containing configuration necessary to execute a handover). In LTE terminology, the handovers are typically called an *RRCConnectionReconfiguration* with a *mobilityControlInfo* (field containing configuration necessary to execute a handover). The term conditional PSCell change or addition is also used to refer to the case where the UE is configured with an RRCReconfiguration prepared by a target SCG candidate, either for SCG addition, if the UE is operating in single connectivity or SCG change if the UE is operating in MR-DC.

Most of the UE (and network) actions defined herein are described as being performed in NR or LTE. In other words, the configuration of a conditional PSCell change or addition received in NR for NR cells, UE detecting SCG RLF in an NR cell and reporting an SCG failure report to an NR cell. However, the method is also applicable when any of these steps occurs in different RATs, for example: the configuration of a conditional PSCell change or addition received in NR for LTE cells (that are SCG candidates), UE detecting SCG RLF in an NR cell and reporting an SCG failure report to an NR cell, including information on the LTE cells for which the UE has stored conditional PSCell change information.

Some embodiments are described in the context of conditional handover/ conditional PSCell addition/change, which should not be seen as a limiting factor. The method may also be applicable for handovers triggered by the reception of an *RRCReconfiguration* message with a *reconfigurationWithSync* without any condition associated (or *RRCConnectionReconfiguration* with a *mobilityControlInfo*)*.*

According to some embodiments, a UE configured with a set of conditional *RRCReconfiguration*(s) (e.g., conditional handover) shall execute a handover or PSCell addition/change (or conditional handover, depending how the procedure is going to be called in NR RRC specifications) when the condition for the handover is fulfilled.

Note here that conditional handover related configuration(s) may be for a cell, list of cell(s), measurement object(s) or frequencies. In the case of the cell association, they may be for the same radio access technology (RAT) or for a different RAT. For example, the "conditional handover related configuration(s)" for a cell may comprise at least the following:
- An *RRCReconfiguration* like message (or any message with equivalent content), possibly containing a *reconfigurationWithSync* using NR terminology (defined in 3GPP Technical Specification (TS) 38.331) and prepared by target candidates. Or, using the E-UTRA terminology, an *RRCConnectionReconfiguration* with *mobilityControlInfo* (defined in TS 36.331);
- Triggering/execution condition(s) configuration e.g. something like A1-A6 or B1-B2 (inter-RAT events) triggering events (as defined in TS 38.331 / 36.331 in reportConfig) where instead of triggering a measurement report it would trigger a conditional handover;
- Optionally other conditional handover controlling parameters e.g. timer defining the validity of target candidate resources, etc.

In one example, this Conditional Handover and/or Conditional PSCell addition/change configuration per target candidate can be represented by the following signaling using the ASN.1 notation:

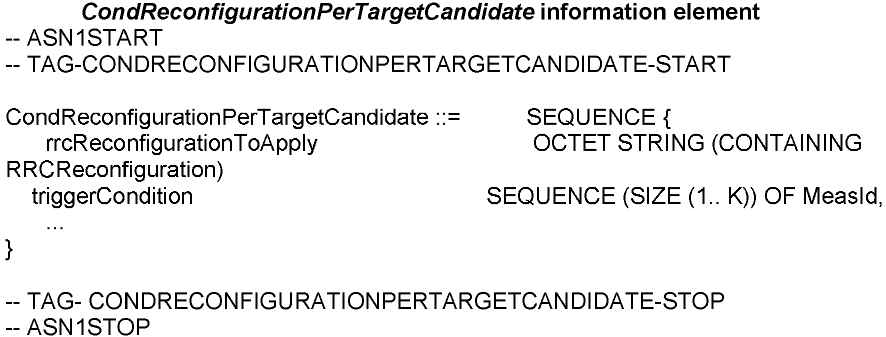

For example, one of the related information to be reported could be which of the conditions in the list have been fulfilled or not. Notice that the condition may be a list of measld where each measld is associated to a trigger condition (e.g. different trigger quantity).

Out of these, the most relevant configuration is indeed the *RRCReconfiguration* per target candidate the UE has been configured with, before the UE detects the SCG failure. That may have been provided to the UE by the network in an RRCReconfiguration message or in an RRCResume message.

### Detailed description of UE actions

Some methods described herein detail the following scenarios (and all combinations thereof):
- UE experiences failure on the SCG (Embodiments A and B) or the MCG (Embodiments C and D);
- UE is configured with conditional Reconfigurations on the MCG (Embodiments B and C) or on the SCG (Embodiments A and D).

Consider now Embodiment A in more detail: Detecting SCG failure when configured with conditional Reconfigurations on the SCG.

In Embodiment A, there is provided a method at a wireless terminal (also called a User Equipment - UE). The method comprises detecting an SCG failure while operating in MR-DC and determining that it has stored conditional PSCell change/addition configuration(s) e.g. configured on the SCG.

The method in embodiment A also comprises transmitting an SCG failure report included in the report. The report includes information related to the stored conditional PSCell change/addition configuration(s) e.g. configured on the SCG. Examples of the information can be at least one of the following.

As one example, the information may include cell identification information (e.g. cell identity and/or physical cell identity - PCI per target cell candidate the UE has stored PSCell change configuration (i.e. a stored *RRCReconfiguration* with *reconfigurationWithSync* in an OCTET STRING).

As another example, the information may include downlink frequency information for the cells the UE has stored PSCell change configuration (i.e. a stored *RRCReconfiguration* with *reconfigurationWithSync* in an OCTET STRING). This cell / frequency information may be retrieved from the reconfigurationWithSync that is within the stored *RCReconfiguration.* More specifically, this cell /frequency information may be retrieved from the *spCellConfigCommon* within the *ReconfigurationWithSync,* as follows (underlined text):

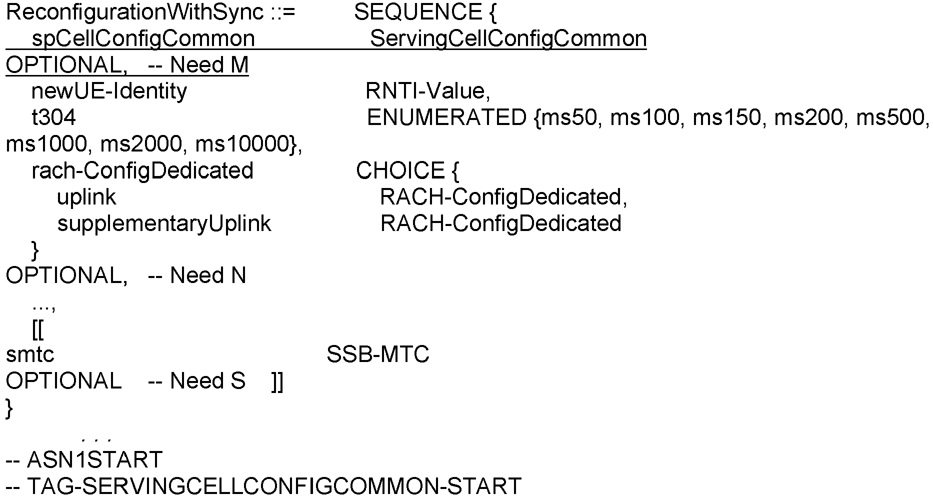

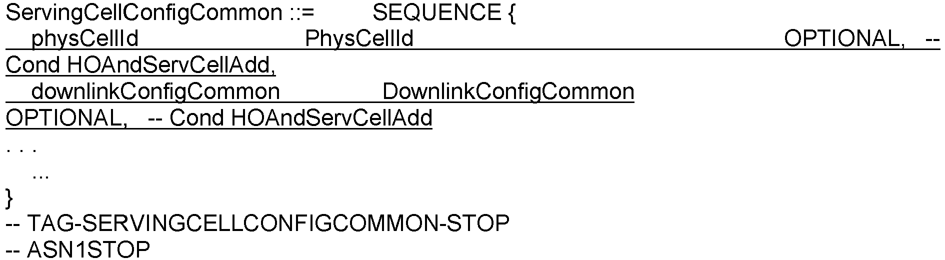

As yet another example, the information may include Information related to the trigger/execution conditions, such as whether at least one condition has been fulfilled or not, which condition has been fulfilled or not, how far the conditions were to be fulfilled in terms of radio conditions, etc.

As another example, the information may include measurements performed while the UE was monitoring the trigger/Execution conditions for the configured target candidates for conditional PSCell change. Here and in the other cases, measurements comprise both cell measurements (e.g. cell level RSRP) and/or beam measurements (e.g. SSB RSRP, SSB RSRQ, SSB SINR, CSI-RS RSRP, CSI-RS RSRQ, CSI-RS SINR, etc.).

As still another example, the information may include an indication that a cell for which the UE is including measurements in the SCG failure report is a cell that the UE has stored conditional PSCell change configuration. That indication can be a flag in report for a given cell, to indicate that stored conditional PSCell change/addition is available. That may be provided as a list of cells for which the UE has stored conditional PSCell change configuration(s), possibly including the previously described information per cell like cell identifier, frequency, etc.

In a first example, this can be implemented in the specifications as shown below:

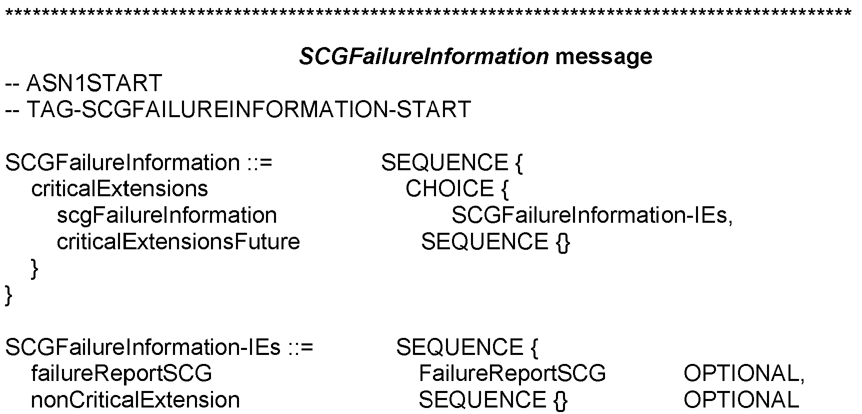

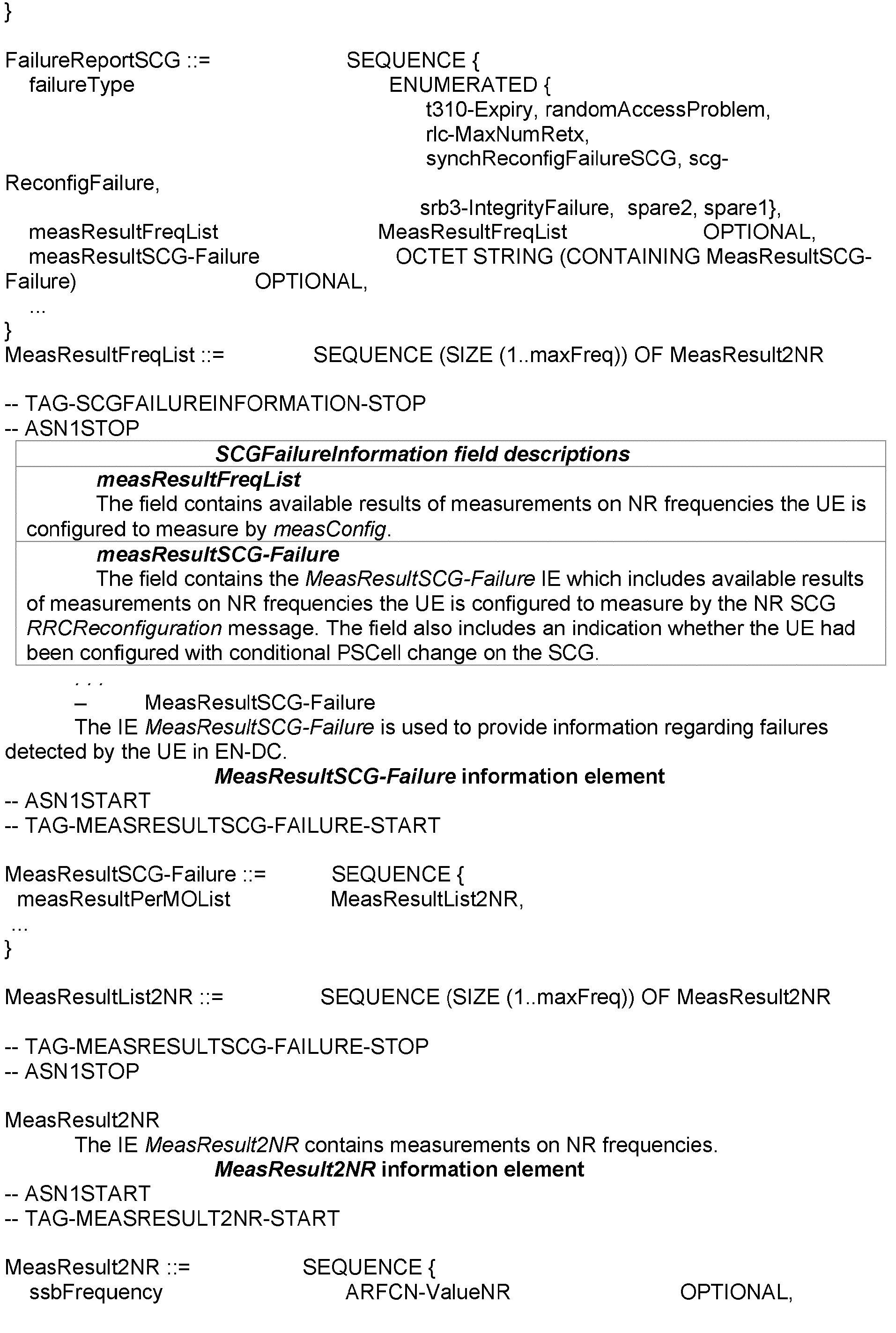

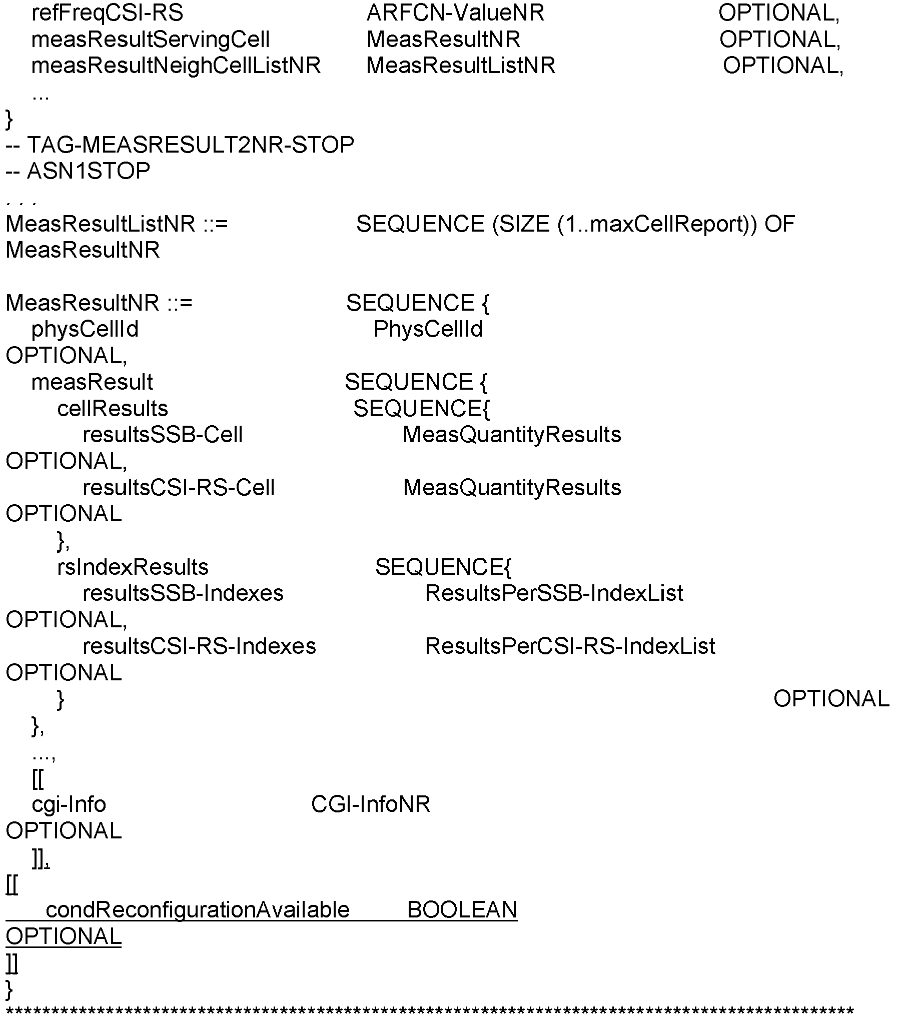

For the first example, the RRC procedures could be modified as follows (underlined text) to implement the method:

### 5.7.3.4 Setting the contents of MeasResultSCG-Failure

The UE shall set the contents of the *MeasResultSCG-Failure* as follows:
1> for each *MeasObjectNR* configured on NR SCG for which a *measId* is configured and measurement results are available:
   2> include an entry in *measResultsPerMOList*;
   2> if there is a *measId* configured with the *MeasObjectNR* and a *reportConfig* which has *rsType* set to *ssb*:
      3> set *ssbFrequency* to the value indicated by *ssbFrequency* as included in the *MeasObjectNR*;
   2> if there is a *measId* configured with the *MeasObjectNR* and a *reportConfig* which has *rsType* set to *csi-rs*:
      3> set *refFreqCSI-RS* to the value indicated by *refFreqCSI-RS* as included in the associated measurement object;
   2> if a serving cell is associated with the *MeasObjectNR*:
      3> set *measResultServingCell* to include the available quantities of the concerned cell and in accordance with the performance requirements in TS 38.133 [14];
   2> set the *measResultNeighCellList* to include the best measured cells, ordered such that the best cell is listed first, and based on measurements collected up to the moment the UE detected the failure, and set its fields as follows;
      3> ordering the cells with sorting as follows:
         4> based on SS/PBCH block if SS/PBCH block measurement results are available and otherwise based on CSI-RS;
         4> using RSRP if RSRP measurement results are available, otherwise using RSRQ if RSRQ measurement results are available, otherwise using SINR;
      3> for each neighbour cell included:
         4> include the optional fields that are available.
         4> if the cell is a cell for which the UE has a stored *RRCReconfiguration* (i.e. conditional PSCell change configuration):
            5> set the field *condReconfiqurationAvailable* to *true;*
NOTE: The measured quantities are filtered by the L3 filter as configured in the mobility measurement configuration. The measurements are based on the time domain measurement resource restriction, if configured. Blacklisted cells are not required to be reported.

In a second example, this can be implemented with an explicit list of cells for which the UE has stored conditional PSCell change configuration(s), as shown below:

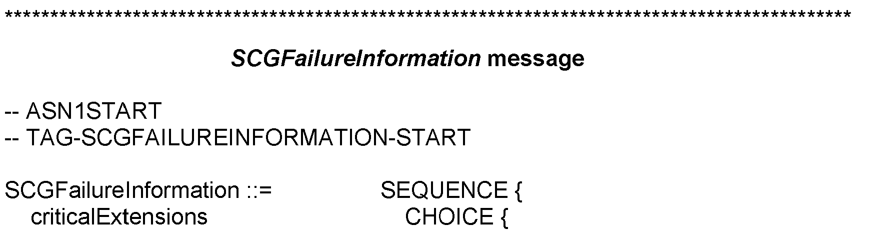

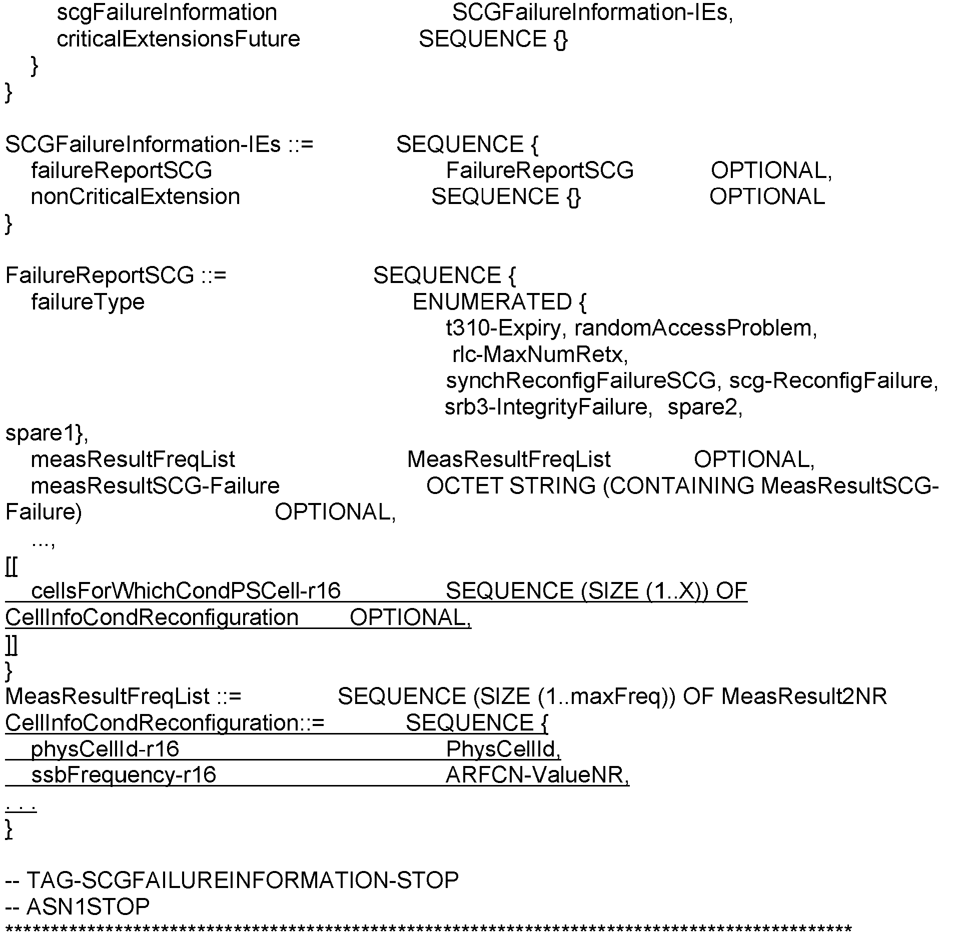

For the second example, the RRC procedures could be modified as follows (underlined text) to implement the method:

### 5.7.3.5 Actions related to transmission of SCGFailureInformation message

The UE shall set the contents of the *SCGFailureInformation* message as follows:
1> if the UE initiates transmission of the *SCGFailureInformation* message due to T310 expiry:
   2> set the *failure Type* as *t310-Expiry*;
1> else if the UE initiates transmission of the *SCGFailureInformation* message to provide reconfiguration with sync failure information for an SCG:
   2> set the *failure Type* as *synchReconfigFailure-SCG*;
1> else if the UE initiates transmission of the *SCGFailureInformation* message to provide random access problem indication from SCG MAC:
   2> set the *failure Type* as *randomAccessProblem*;
1> else if the UE initiates transmission of the *SCGFailureInformation* message to provide indication from SCG RLC that the maximum number of retransmissions has been reached:
   2> set the *failure Type* as *rlc-MaxNumRetx*;
1> else if the UE initiates transmission of the *SCGFailureInformation* message due to SRB3 IP check failure:
   2> set the *failure Type* as *srb3-IntegrityFailure*;
1> else if the UE initiates transmission of the *SCGFailureInformation* message due to Reconfiguration failure of NR RRC reconfiguration message:
   2> set the *failure Type* as *scg-reconfigFailure.*
1> include and set MeasResultSCG-Failure in accordance with 5.7.3.4;
1> include *cellsForWhichCondPSCell* information for the cells for which the UE has stored *RRCReconfiguration* for conditional PSCell change, if available;
1> for each NR frequency the UE is configured to measure by a *MeasConfig* associate with the MCG and for which measurement results are available:
   2> set the *measResultFreqList* to include the best measured cells, ordered such that the best cell is listed first using RSRP to order if RSRP measurement results are available for cells on this frequency, otherwise using RSRQ to order if RSRQ measurement results are available for cells on this frequency, otherwise using SINR to order, and based on measurements collected up to the moment the UE detected the failure, and for each cell that is included, include the optional fields that are available;
NOTE: Field *measResultSCG-Failure* is used to report available results for NR frequencies the UE is configured to measure by SCG RRC signalling.

The UE shall submit the *SCGFailureInformation* message to lower layers for transmission.

Consider now Embodiment B in more detail: Detecting SCG failure when configured with conditional Reconfigurations on the MCG

In Embodiment B, there is provided a method at a wireless terminal (also called a User Equipment - UE). The method comprises detecting an SCG failure while operating in MR-DC and determining that it has stored conditional PSCell change/addition configuration(s) or conditional handover configuration(s) e.g. configured on the MCG.

The method also comprises transmitting an SCG failure report including in the report one or more of the following. The report may include information related to the stored conditional PSCell change/addition configuration(s) and/or conditional handover e.g. configured on the MCG; Examples of the information can be at least one of the following.

In one example, the information includes cell identification information (e.g. cell identity and/or physical cell identity - PCI per target cell candidate the UE has stored PSCell change configuration (i.e. a stored *RRCReconfiguration* with *reconfigurationWithSync* in an OCTET STRING).

In another example, the information includes downlink frequency information for the cells the UE has stored PSCell change configuration (i.e. a stored *RRCReconfiguration* with *reconfigurationWithSync* in an OCTET STRING). The cell / frequency information may be retrieved from the reconfigurationWithSync that is within the stored *RRCReconfiguration,* more specifically from the *spCellConfigCommon* within the *ReconfigurationWithSync,* as described above with respect to embodiment A.

In yet another example, the information includes information related to the trigger/execution conditions, such as whether at least one condition has been fulfilled or not, which condition has been fulfilled or not, how far the conditions were to be fulfilled in terms of radio conditions, etc.

In still another example, the information includes measurements performed while the UE was monitoring the trigger/Execution conditions for the configured conditional PSCell change.

In another example, the information includes an indication that a cell for which the UE is including measurements in the SCG failure report is a cell that the UE has stored conditional PSCell change configuration. That indication can be a flag in report for a given cell, to indicate that stored conditional PSCell change/addition is available. That may be provided as a list of cells for which the UE has stored conditional PSCell change configuration(s), possibly including the previously described information per cell like cell identifier, frequency, etc.

For the modifications to the specifications, similar changes may be done as shown in Embodiment A. One difference could be a different flag e.g. indication whether the cell information is for a prepared Conditional handover or conditional PSCell addition/change. The method comprises then the possibility to define two lists of cells for which the UE has stored configurations, one for CHO and another for conditional PSCell changes (and/or conditional PSCell additions).

Consider now Embodiment C in more detail: Detecting MCG failure when configured with conditional Reconfigurations on the MCG.

In embodiment C, there is provided a method at a wireless terminal (also called a User Equipment - UE). The method comprises detecting an MCG failure while operating in MR-DC and determining that it has stored conditional PSCell change/addition configuration(s) and/or conditional handover configuration(s) e.g. configured on the MCG.

The method further comprises transmitting an MCG failure report including in the report one or more of the following. The report may include information related to the stored conditional PSCell change/addition configuration(s) and/or conditional handover e.g. configured on the MCG; Examples of the information can be at least one of the following.

In one example, the information includes cell identification information (e.g. cell identity and/or physical cell identity - PCI per target cell candidate the UE has stored PSCell change configuration (i.e. a stored *RRCReconfiguration* with *reconfigurationWithSync* in an OCTET STRING).

In another example, the information includes downlink frequency information for the cells the UE has stored PSCell change configuration (i.e. a stored *RRCReconfiguration* with *reconfigurationWithSync* in an OCTET STRING). Cell / frequency information may be retrieved from the reconfigurationWithSync that is within the stored *RRCReconfiguration,* more specifically from the *spCellConfigCommon* within the *ReconfigurationWithSync,* as described above with respect to embodiment A.

In yet another example, the information includes information related to the trigger/execution conditions, such as whether at least one condition has been fulfilled or not, which condition has been fulfilled or not, how far the conditions were to be fulfilled in terms of radio conditions, etc.

In still another example, the information includes measurements performed while the UE was monitoring the trigger/Execution conditions for the configured conditional PSCell change.

In another example, the information includes an indication that a cell for which the UE is including measurements in the SCG failure report is a cell that the UE has stored conditional PSCell change configuration. That indication can be a flag in report for a given cell, to indicate that stored conditional PSCell change/addition is available. That may be provided as a list of cells for which the UE has stored conditional PSCell change configuration(s), possibly including the previously described information per cell like cell identifier, frequency, etc.

Consider now Embodiment D in more detail: Detecting MCG failure when configured with conditional Reconfigurations on the SCG.

In Embodiment D, there is provided a method at a wireless terminal (also called a User Equipment - UE). The method comprises detecting an MCG failure while operating in MR-DC and determining that it has stored conditional PSCell change/addition configuration(s) e.g. configured on the SCG.

The method also comprises transmitting an MCG failure report including in the report one or more of the following. The report may include information related to the stored conditional PSCell change/addition configuration(s) e.g. configured on the SCG; Examples of the information can be at least one of the following.

In one example, the information may include cell identification information (e.g. cell identity and/or physical cell identity - PCI per target cell candidate the UE has stored PSCell change configuration (i.e. a stored *RRCReconfiguration* with *reconfigurationWithSync* in an OCTET STRING).

In another example, the information may include downlink frequency information for the cells the UE has stored PSCell change configuration (i.e. a stored *RRCReconfiguration* with *reconfigurationWithSync* in an OCTET STRING).

In still another example, the information may include cell / frequency information may be retrieved from the reconfigurationWithSync that is within the stored *RRCReconfiguration,* more specifically from the *spCellConfigCommon* within the *ReconfigurationWithSync,* as described above with respect to embodiment A.

In yet another example, the information may include information related to the trigger/execution conditions, such as whether at least one condition has been fulfilled or not, which condition has been fulfilled or not, how far the conditions were to be fulfilled in terms of radio conditions, etc.

In another example, the information may include measurements performed while the UE was monitoring the trigger/Execution conditions for the configured conditional PSCell change.

In another example, the information may include an indication that a cell for which the UE is including measurements in the SCG failure report is a cell that the UE has stored conditional PSCell change configuration. That indication can be a flag in report for a given cell, to indicate that stored conditional PSCell change/addition is available. That may be provided as a list of cells for which the UE has stored conditional PSCell change configuration(s), possibly including the previously described information per cell like cell identifier, frequency, etc.

In a first example, this can be implemented in the specifications as shown below. Similar to Embodiment A) above, the MCGFailureInformation will contain the *MeasResultList2NR* inside the *measResultFreqList*, thus, the embodiments described therein to indicate that there are stored conditional reconfigurations available. This could be the same indication as above, or a separate indication

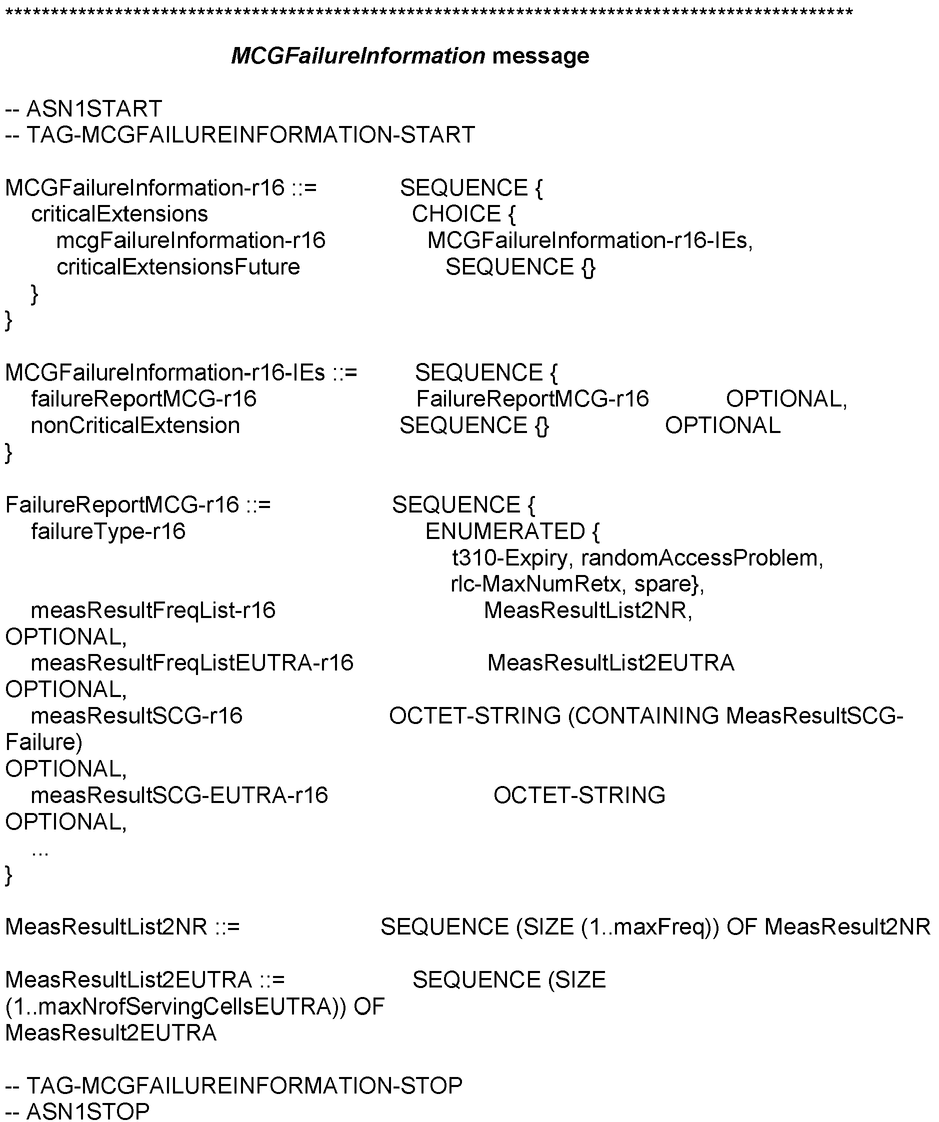

| ***MCGFailureInformation field descriptions*** |
|---|
| ***measResultFreqList*** |
| The field contains available results of measurements on NR frequencies the UE is configured to measure by the *measConfig* associated with the MCG. The field also includes an indication whether the UE had been configured with conditional handover configuration on the MCG or conditional PSCell change on the SCG |
| ***measResultFreqListEUTRA*** |
| The field contains available results of measurements on E-UTRA frequencies the UE is configured to measure by *measConfig* associated with the MCG. |
| ***measResultSCG*** |
| The field contains the *MeasResultSCG-Failure* IE which includes available measurement results on NR frequencies the UE is configured to measure by the *measConfig* associated with the SCG. |
| ***measResultSCG-EUTRA*** |
| The field contains the EUTRA *MeasResultSCG-FailureMRDC* IE which includes available results of measurements on E-UTRA frequencies the UE is configured to measure by the E-UTRA *RRCConnectionReconfiguration* message as specified in TS 36.331 [10]. |

### Actions related to transmission of MCGFailurelnformation message

The UE shall set the contents of the *MCGFailureInformation* message as follows:
1> include and set *failure Type*;
1> for each NR frequency the UE is configured to measure by a *MeasConfig* associated with the MCG and for which measurement results are available:
   2> set the *measResultFreqList* to include the best measured cells, ordered such that the best cell is listed first using RSRP to order if RSRP measurement results are available for cells on this frequency, otherwise using RSRQ to order if RSRQ measurement results are available for cells on this frequency, otherwise using SINR to order, and based on measurements collected up to the moment the UE detected the failure, and for each cell that is included, include the optional fields that are available;
1> if the UE is in NR-DC;
   2> include and set *MeasResultSCG*;
1> if the UE is in NE-DC;
   2> for each EUTRA frequency the UE is configured to measure by measConfig for which measurement results are available:
      3> set the measResultFreqListEUTRA to include the best measured cells, ordered such that the best cell is listed first using RSRP to order if RSRP measurement results are available for cells on this frequency, otherwise using RSRQ to order if RSRQ measurement results are available for cells on this frequency, otherwise using SINR to order, and based on measurements collected up to the moment the UE detected the failure, and for each cell that is included, include the optional fields that are available;
   2> include and set *MeasResultSCG-EUTRA*;
1> if SRB1 is configured as Split SRB and *pdcp-Duplication* is not configured;
   2> if *primaryPath* is set to a cell group ID corresponding to MCG;
      3> set *primaryPath* to a cell group ID corresponding to SCG;
1> if the cell is a cell for which the UE has a stored *RRCReconfiguration* (i.e. conditional handover configuration):
   2> set the field *storedCondReconf* to *true;*

The UE shall:
1> start timer Txxx;
1> submit the *MCGFailureInformation* message to lower layers for transmission.

In a second example, this can be implemented as an explicit list of cells for which the UE has stored conditional handover or PSCell add/change configuration(s) as shown below:

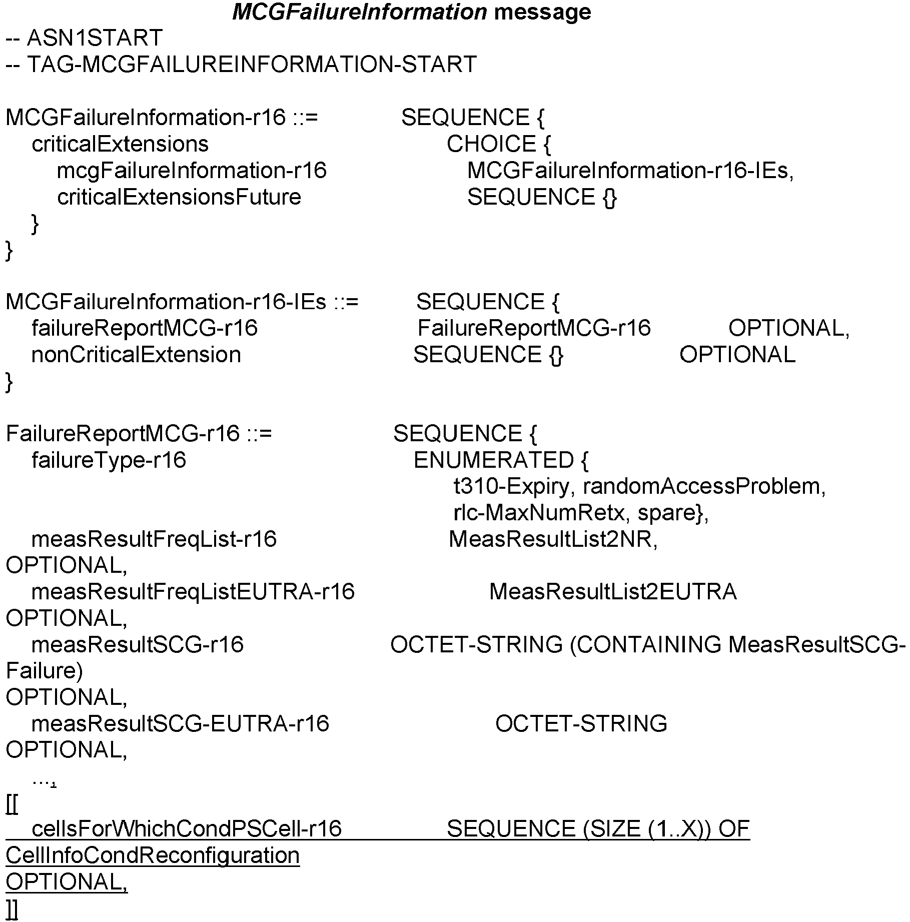

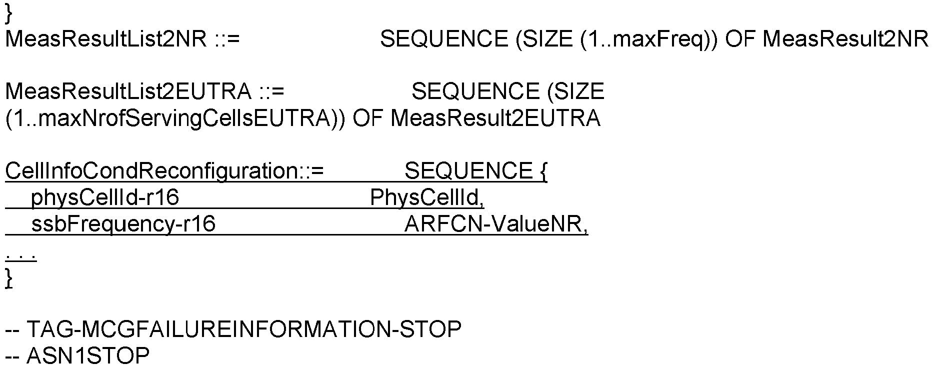

| ***MCGFailureInformation field descriptions*** |
|---|
| ***measResultFreqList*** |
| The field contains available results of measurements on NR frequencies the UE is configured to measure by the *measConfig* associated with the MCG. |
| ***measResultFreqListEUTRA*** |
| The field contains available results of measurements on E-UTRA frequencies the UE is configured to measure by *measConfig* associated with the MCG. |
| ***measResultSCG*** |
| The field contains the *MeasResultSCG-Failure* IE which includes available measurement results on NR frequencies the UE is configured to measure by the *measConfig* associated with the SCG. |
| ***measResultSCG-EUTRA*** |
| The field contains the EUTRA *MeasResultSCG-FailureMRDC* IE which includes available results of measurements on E-UTRA frequencies the UE is configured to measure by the E-UTRA *RRCConnectionReconfiguration* message as specified in TS 36.331 [10]. |

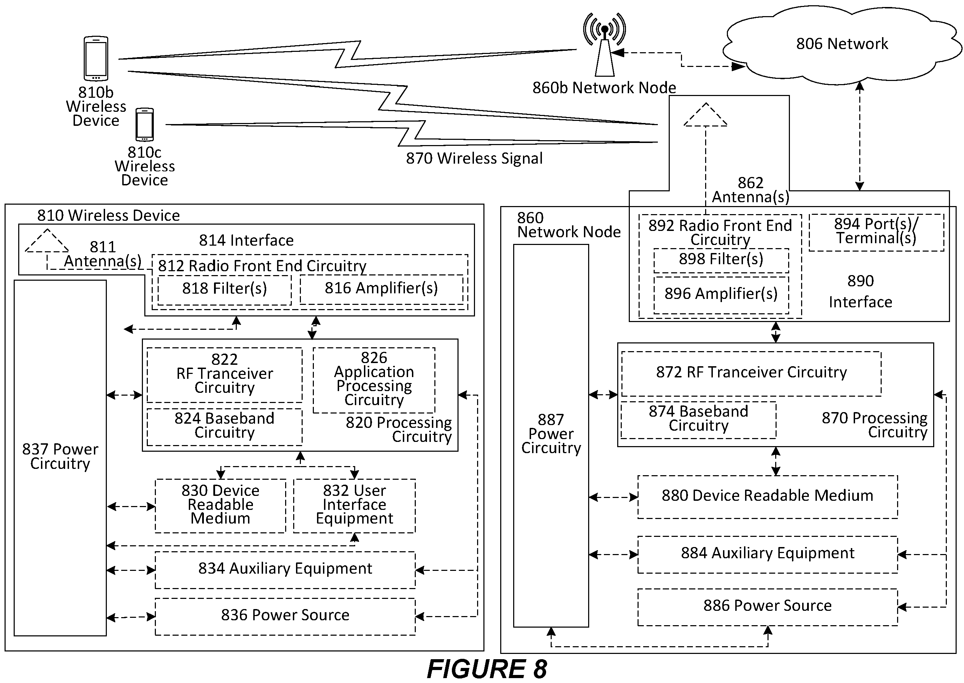

Although the subject matter described herein may be implemented in any appropriate type of system using any suitable components, the embodiments disclosed herein are described in relation to a wireless network, such as the example wireless network illustrated in Figure 8. For simplicity, the wireless network of Figure 8 only depicts network 806, network nodes 860 and 860b, and WDs 810, 810b, and 810c. In practice, a wireless network may further include any additional elements suitable to support communication between wireless devices or between a wireless device and another communication device, such as a landline telephone, a service provider, or any other network node or end device. Of the illustrated components, network node 860 and wireless device (WD) 810 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-IoT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 806 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 860 and WD 810 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 8, network node 860 includes processing circuitry 870, device readable medium 880, interface 890, auxiliary equipment 884, power source 886, power circuitry 887, and antenna 862. Although network node 860 illustrated in the example wireless network of Figure 8 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 860 are depicted as single boxes located within a larger box, or nested within multiple boxes, in practice, a network node may comprise multiple different physical components that make up a single illustrated component (e.g., device readable medium 880 may comprise multiple separate hard drives as well as multiple RAM modules).

Similarly, network node 860 may be composed of multiple physically separate components (e.g., a NodeB component and a RNC component, or a BTS component and a BSC component, etc.), which may each have their own respective components. In certain scenarios in which network node 860 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 860 may be configured to support multiple radio access technologies (RATs). In such embodiments, some components may be duplicated (e.g., separate device readable medium 880 for the different RATs) and some components may be reused (e.g., the same antenna 862 may be shared by the RATs). Network node 860 may also include multiple sets of the various illustrated components for different wireless technologies integrated into network node 860, such as, for example, GSM, WCDMA, LTE, NR, WiFi, or Bluetooth wireless technologies. These wireless technologies may be integrated into the same or different chip or set of chips and other components within network node 860.

Processing circuitry 870 is configured to perform any determining, calculating, or similar operations (e.g., certain obtaining operations) described herein as being provided by a network node. These operations performed by processing circuitry 870 may include processing information obtained by processing circuitry 870 by, for example, converting the obtained information into other information, comparing the obtained information or converted information to information stored in the network node, and/or performing one or more operations based on the obtained information or converted information, and as a result of said processing making a determination.

Processing circuitry 870 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 860 components, such as device readable medium 880, network node 860 functionality. For example, processing circuitry 870 may execute instructions stored in device readable medium 880 or in memory within processing circuitry 870. Such functionality may include providing any of the various wireless features, functions, or benefits discussed herein. In some embodiments, processing circuitry 870 may include a system on a chip (SOC).

In some embodiments, processing circuitry 870 may include one or more of radio frequency (RF) transceiver circuitry 872 and baseband processing circuitry 874. In some embodiments, radio frequency (RF) transceiver circuitry 872 and baseband processing circuitry 874 may be on separate chips (or sets of chips), boards, or units, such as radio units and digital units. In alternative embodiments, part or all of RF transceiver circuitry 872 and baseband processing circuitry 874 may be on the same chip or set of chips, boards, or units

In certain embodiments, some or all of the functionality described herein as being provided by a network node, base station, eNB or other such network device may be performed by processing circuitry 870 executing instructions stored on device readable medium 880 or memory within processing circuitry 870. In alternative embodiments, some or all of the functionality may be provided by processing circuitry 870 without executing instructions stored on a separate or discrete device readable medium, such as in a hard-wired manner. In any of those embodiments, whether executing instructions stored on a device readable storage medium or not, processing circuitry 870 can be configured to perform the described functionality. The benefits provided by such functionality are not limited to processing circuitry 870 alone or to other components of network node 860, but are enjoyed by network node 860 as a whole, and/or by end users and the wireless network generally.

Device readable medium 880 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 870. Device readable medium 880 may store any suitable instructions, data or information, including a computer program, software, an application including one or more of logic, rules, code, tables, etc. and/or other instructions capable of being executed by processing circuitry 870 and, utilized by network node 860. Device readable medium 880 may be used to store any calculations made by processing circuitry 870 and/or any data received via interface 890. In some embodiments, processing circuitry 870 and device readable medium 880 may be considered to be integrated.

Interface 890 is used in the wired or wireless communication of signalling and/or data between network node 860, network 806, and/or WDs 810. As illustrated, interface 890 comprises port(s)/terminal(s) 894 to send and receive data, for example to and from network 806 over a wired connection. Interface 890 also includes radio front end circuitry 892 that may be coupled to, or in certain embodiments a part of, antenna 862. Radio front end circuitry 892 comprises filters 898 and amplifiers 896. Radio front end circuitry 892 may be connected to antenna 862 and processing circuitry 870. Radio front end circuitry may be configured to condition signals communicated between antenna 862 and processing circuitry 870. Radio front end circuitry 892 may receive digital data that is to be sent out to other network nodes or WDs via a wireless connection. Radio front end circuitry 892 may convert the digital data into a radio signal having the appropriate channel and bandwidth parameters using a combination of filters 898 and/or amplifiers 896. The radio signal may then be transmitted via antenna 862. Similarly, when receiving data, antenna 862 may collect radio signals which are then converted into digital data by radio front end circuitry 892. The digital data may be passed to processing circuitry 870. In other embodiments, the interface may comprise different components and/or different combinations of components.

In certain alternative embodiments, network node 860 may not include separate radio front end circuitry 892, instead, processing circuitry 870 may comprise radio front end circuitry and may be connected to antenna 862 without separate radio front end circuitry 892. Similarly, in some embodiments, all or some of RF transceiver circuitry 872 may be considered a part of interface 890. In still other embodiments, interface 890 may include one or more ports or terminals 894, radio front end circuitry 892, and RF transceiver circuitry 872, as part of a radio unit (not shown), and interface 890 may communicate with baseband processing circuitry 874, which is part of a digital unit (not shown).

Antenna 862 may include one or more antennas, or antenna arrays, configured to send and/or receive wireless signals. Antenna 862 may be coupled to radio front end circuitry 890 and may be any type of antenna capable of transmitting and receiving data and/or signals wirelessly. In some embodiments, antenna 862 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 862 may be separate from network node 860 and may be connectable to network node 860 through an interface or port.

Antenna 862, interface 890, and/or processing circuitry 870 may be configured to perform any receiving operations and/or certain obtaining operations described herein as being performed by a network node. Any information, data and/or signals may be received from a wireless device, another network node and/or any other network equipment. Similarly, antenna 862, interface 890, and/or processing circuitry 870 may be configured to perform any transmitting operations described herein as being performed by a network node. Any information, data and/or signals may be transmitted to a wireless device, another network node and/or any other network equipment.

Power circuitry 887 may comprise, or be coupled to, power management circuitry and is configured to supply the components of network node 860 with power for performing the functionality described herein. Power circuitry 887 may receive power from power source 886. Power source 886 and/or power circuitry 887 may be configured to provide power to the various components of network node 860 in a form suitable for the respective components (e.g., at a voltage and current level needed for each respective component). Power source 886 may either be included in, or external to, power circuitry 887 and/or network node 860. For example, network node 860 may be connectable to an external power source (e.g., an electricity outlet) via an input circuitry or interface such as an electrical cable, whereby the external power source supplies power to power circuitry 887. As a further example, power source 886 may comprise a source of power in the form of a battery or battery pack which is connected to, or integrated in, power circuitry 887. The battery may provide backup power should the external power source fail. Other types of power sources, such as photovoltaic devices, may also be used.

Alternative embodiments of network node 860 may include additional components beyond those shown in Figure 8 that may be responsible for providing certain aspects of the network node's functionality, including any of the functionality described herein and/or any functionality necessary to support the subject matter described herein. For example, network node 860 may include user interface equipment to allow input of information into network node 860 and to allow output of information from network node 860. This may allow a user to perform diagnostic, maintenance, repair, and other administrative functions for network node 860.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 810 includes antenna 811, interface 814, processing circuitry 820, device readable medium 830, user interface equipment 832, auxiliary equipment 834, power source 836 and power circuitry 837. WD 810 may include multiple sets of one or more of the illustrated components for different wireless technologies supported by WD 810, such as, for example, GSM, WCDMA, LTE, NR, WiFi, WiMAX, NB-IoT, or Bluetooth wireless technologies, just to mention a few. These wireless technologies may be integrated into the same or different chips or set of chips as other components within WD 810.

Antenna 811 may include one or more antennas or antenna arrays, configured to send and/or receive wireless signals, and is connected to interface 814. In certain alternative embodiments, antenna 811 may be separate from WD 810 and be connectable to WD 810 through an interface or port. Antenna 811, interface 814, and/or processing circuitry 820 may be configured to perform any receiving or transmitting operations described herein as being performed by a WD. Any information, data and/or signals may be received from a network node and/or another WD. In some embodiments, radio front end circuitry and/or antenna 811 may be considered an interface.

As illustrated, interface 814 comprises radio front end circuitry 812 and antenna 811. Radio front end circuitry 812 comprise one or more filters 818 and amplifiers 816. Radio front end circuitry 814 is connected to antenna 811 and processing circuitry 820, and is configured to condition signals communicated between antenna 811 and processing circuitry 820. Radio front end circuitry 812 may be coupled to or a part of antenna 811. In some embodiments, WD 810 may not include separate radio front end circuitry 812; rather, processing circuitry 820 may comprise radio front end circuitry and may be connected to antenna 811. Similarly, in some embodiments, some or all of RF transceiver circuitry 822 may be considered a part of interface 814. Radio front end circuitry 812 may receive digital data that is to be sent out to other network nodes or WDs via a wireless connection. Radio front end circuitry 812 may convert the digital data into a radio signal having the appropriate channel and bandwidth parameters using a combination of filters 818 and/or amplifiers 816. The radio signal may then be transmitted via antenna 811. Similarly, when receiving data, antenna 811 may collect radio signals which are then converted into digital data by radio front end circuitry 812. The digital data may be passed to processing circuitry 820. In other embodiments, the interface may comprise different components and/or different combinations of components.

Processing circuitry 820 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 810 components, such as device readable medium 830, WD 810 functionality. Such functionality may include providing any of the various wireless features or benefits discussed herein. For example, processing circuitry 820 may execute instructions stored in device readable medium 830 or in memory within processing circuitry 820 to provide the functionality disclosed herein.

As illustrated, processing circuitry 820 includes one or more of RF transceiver circuitry 822, baseband processing circuitry 824, and application processing circuitry 826. In other embodiments, the processing circuitry may comprise different components and/or different combinations of components. In certain embodiments processing circuitry 820 of WD 810 may comprise a SOC. In some embodiments, RF transceiver circuitry 822, baseband processing circuitry 824, and application processing circuitry 826 may be on separate chips or sets of chips. In alternative embodiments, part or all of baseband processing circuitry 824 and application processing circuitry 826 may be combined into one chip or set of chips, and RF transceiver circuitry 822 may be on a separate chip or set of chips. In still alternative embodiments, part or all of RF transceiver circuitry 822 and baseband processing circuitry 824 may be on the same chip or set of chips, and application processing circuitry 826 may be on a separate chip or set of chips. In yet other alternative embodiments, part or all of RF transceiver circuitry 822, baseband processing circuitry 824, and application processing circuitry 826 may be combined in the same chip or set of chips. In some embodiments, RF transceiver circuitry 822 may be a part of interface 814. RF transceiver circuitry 822 may condition RF signals for processing circuitry 820.

In certain embodiments, some or all of the functionality described herein as being performed by a WD may be provided by processing circuitry 820 executing instructions stored on device readable medium 830, which in certain embodiments may be a computer-readable storage medium. In alternative embodiments, some or all of the functionality may be provided by processing circuitry 820 without executing instructions stored on a separate or discrete device readable storage medium, such as in a hard-wired manner. In any of those particular embodiments, whether executing instructions stored on a device readable storage medium or not, processing circuitry 820 can be configured to perform the described functionality. The benefits provided by such functionality are not limited to processing circuitry 820 alone or to other components of WD 810, but are enjoyed by WD 810 as a whole, and/or by end users and the wireless network generally.

Processing circuitry 820 may be configured to perform any determining, calculating, or similar operations (e.g., certain obtaining operations) described herein as being performed by a WD. These operations, as performed by processing circuitry 820, may include processing information obtained by processing circuitry 820 by, for example, converting the obtained information into other information, comparing the obtained information or converted information to information stored by WD 810, and/or performing one or more operations based on the obtained information or converted information, and as a result of said processing making a determination.

Device readable medium 830 may be operable to store a computer program, software, an application including one or more of logic, rules, code, tables, etc. and/or other instructions capable of being executed by processing circuitry 820. Device readable medium 830 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 820. In some embodiments, processing circuitry 820 and device readable medium 830 may be considered to be integrated.

User interface equipment 832 may provide components that allow for a human user to interact with WD 810. Such interaction may be of many forms, such as visual, audial, tactile, etc. User interface equipment 832 may be operable to produce output to the user and to allow the user to provide input to WD 810. The type of interaction may vary depending on the type of user interface equipment 832 installed in WD 810. For example, if WD 810 is a smart phone, the interaction may be via a touch screen; if WD 810 is a smart meter, the interaction may be through a screen that provides usage (e.g., the number of gallons used) or a speaker that provides an audible alert (e.g., if smoke is detected). User interface equipment 832 may include input interfaces, devices and circuits, and output interfaces, devices and circuits. User interface equipment 832 is configured to allow input of information into WD 810, and is connected to processing circuitry 820 to allow processing circuitry 820 to process the input information. User interface equipment 832 may include, for example, a microphone, a proximity or other sensor, keys/buttons, a touch display, one or more cameras, a USB port, or other input circuitry. User interface equipment 832 is also configured to allow output of information from WD 810, and to allow processing circuitry 820 to output information from WD 810. User interface equipment 832 may include, for example, a speaker, a display, vibrating circuitry, a USB port, a headphone interface, or other output circuitry. Using one or more input and output interfaces, devices, and circuits, of user interface equipment 832, WD 810 may communicate with end users and/or the wireless network, and allow them to benefit from the functionality described herein.

Auxiliary equipment 834 is operable to provide more specific functionality which may not be generally performed by WDs. This may comprise specialized sensors for doing measurements for various purposes, interfaces for additional types of communication such as wired communications etc. The inclusion and type of components of auxiliary equipment 834 may vary depending on the embodiment and/or scenario.

Power source 836 may, in some embodiments, be in the form of a battery or battery pack. Other types of power sources, such as an external power source (e.g., an electricity outlet), photovoltaic devices or power cells, may also be used. WD 810 may further comprise power circuitry 837 for delivering power from power source 836 to the various parts of WD 810 which need power from power source 836 to carry out any functionality described or indicated herein. Power circuitry 837 may in certain embodiments comprise power management circuitry. Power circuitry 837 may additionally or alternatively be operable to receive power from an external power source; in which case WD 810 may be connectable to the external power source (such as an electricity outlet) via input circuitry or an interface such as an electrical power cable. Power circuitry 837 may also in certain embodiments be operable to deliver power from an external power source to power source 836. This may be, for example, for the charging of power source 836. Power circuitry 837 may perform any formatting, converting, or other modification to the power from power source 836 to make the power suitable for the respective components of WD 810 to which power is supplied.

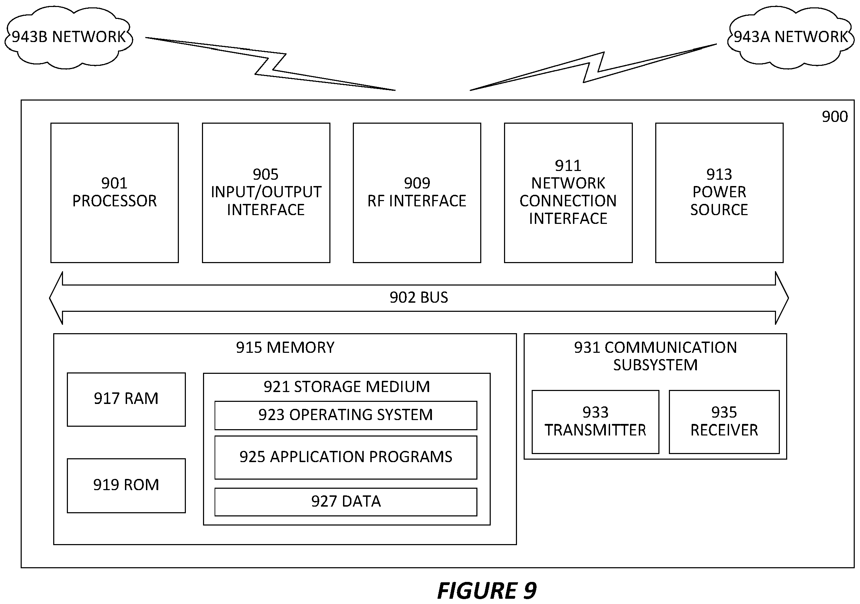

Figure 9 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 900 may be any UE identified by the 3^{rd} Generation Partnership Project (3GPP), including a NB-loT UE, a machine type communication (MTC) UE, and/or an enhanced MTC (eMTC) UE. UE 900, as illustrated in Figure 9, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 9 is a UE, the components discussed herein are equally applicable to a WD, and vice-versa.

In Figure 9, UE 900 includes processing circuitry 901 that is operatively coupled to input/output interface 905, radio frequency (RF) interface 909, network connection interface 911, memory 915 including random access memory (RAM) 917, read-only memory (ROM) 919, and storage medium 921 or the like, communication subsystem 931, power source 933, and/or any other component, or any combination thereof. Storage medium 921 includes operating system 923, application program 925, and data 927. In other embodiments, storage medium 921 may include other similar types of information. Certain UEs may utilize all of the components shown in Figure 9, or only a subset of the components. The level of integration between the components may vary from one UE to another UE. Further, certain UEs may contain multiple instances of a component, such as multiple processors, memories, transceivers, transmitters, receivers, etc.

In Figure 9, processing circuitry 901 may be configured to process computer instructions and data. Processing circuitry 901 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 901 may include two central processing units (CPUs). Data may be information in a form suitable for use by a computer.

In the depicted embodiment, input/output interface 905 may be configured to provide a communication interface to an input device, output device, or input and output device. UE 900 may be configured to use an output device via input/output interface 905. An output device may use the same type of interface port as an input device. For example, a USB port may be used to provide input to and output from UE 900. The output device may be a speaker, a sound card, a video card, a display, a monitor, a printer, an actuator, an emitter, a smartcard, another output device, or any combination thereof. UE 900 may be configured to use an input device via input/output interface 905 to allow a user to capture information into UE 900. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 9, RF interface 909 may be configured to provide a communication interface to RF components such as a transmitter, a receiver, and an antenna. Network connection interface 911 may be configured to provide a communication interface to network 943a. Network 943a may encompass wired and/or wireless networks such as a local-area network (LAN), a wide-area network (WAN), a computer network, a wireless network, a telecommunications network, another like network or any combination thereof. For example, network 943a may comprise a Wi-Fi network. Network connection interface 911 may be configured to include a receiver and a transmitter interface used to communicate with one or more other devices over a communication network according to one or more communication protocols, such as Ethernet, TCP/IP, SONET, ATM, or the like. Network connection interface 911 may implement receiver and transmitter functionality appropriate to the communication network links (e.g., optical, electrical, and the like). The transmitter and receiver functions may share circuit components, software or firmware, or alternatively may be implemented separately.

RAM 917 may be configured to interface via bus 902 to processing circuitry 901 to provide storage or caching of data or computer instructions during the execution of software programs such as the operating system, application programs, and device drivers. ROM 919 may be configured to provide computer instructions or data to processing circuitry 901. For example, ROM 919 may be configured to store invariant low-level system code or data for basic system functions such as basic input and output (I/O), startup, or reception of keystrokes from a keyboard that are stored in a non-volatile memory. Storage medium 921 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 921 may be configured to include operating system 923, application program 925 such as a web browser application, a widget or gadget engine or another application, and data file 927. Storage medium 921 may store, for use by UE 900, any of a variety of various operating systems or combinations of operating systems.

Storage medium 921 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 921 may allow UE 900 to access computer-executable instructions, application programs or the like, stored on transitory or non-transitory memory media, to off-load data, or to upload data. An article of manufacture, such as one utilizing a communication system may be tangibly embodied in storage medium 921, which may comprise a device readable medium.

In Figure 9, processing circuitry 901 may be configured to communicate with network 943b using communication subsystem 931. Network 943a and network 943b may be the same network or networks or different network or networks. Communication subsystem 931 may be configured to include one or more transceivers used to communicate with network 943b. For example, communication subsystem 931 may be configured to include one or more transceivers used to communicate with one or more remote transceivers of another device capable of wireless communication such as another WD, UE, or base station of a radio access network (RAN) according to one or more communication protocols, such as IEEE 802.9, CDMA, WCDMA, GSM, LTE, UTRAN, WiMax, or the like. Each transceiver may include transmitter 933 and/or receiver 935 to implement transmitter or receiver functionality, respectively, appropriate to the RAN links (e.g., frequency allocations and the like). Further, transmitter 933 and receiver 935 of each transceiver may share circuit components, software or firmware, or alternatively may be implemented separately.

In the illustrated embodiment, the communication functions of communication subsystem 931 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 931 may include cellular communication, Wi-Fi communication, Bluetooth communication, and GPS communication. Network 943b may encompass wired and/or wireless networks such as a local-area network (LAN), a wide-area network (WAN), a computer network, a wireless network, a telecommunications network, another like network or any combination thereof. For example, network 943b may be a cellular network, a Wi-Fi network, and/or a near-field network. Power source 913 may be configured to provide alternating current (AC) or direct current (DC) power to components of UE 900.

The features, benefits and/or functions described herein may be implemented in one of the components of UE 900 or partitioned across multiple components of UE 900. Further, the features, benefits, and/or functions described herein may be implemented in any combination of hardware, software or firmware. In one example, communication subsystem 931 may be configured to include any of the components described herein. Further, processing circuitry 901 may be configured to communicate with any of such components over bus 902. In another example, any of such components may be represented by program instructions stored in memory that when executed by processing circuitry 901 perform the corresponding functions described herein. In another example, the functionality of any of such components may be partitioned between processing circuitry 901 and communication subsystem 931. In another example, the non-computationally intensive functions of any of such components may be implemented in software or firmware and the computationally intensive functions may be implemented in hardware.

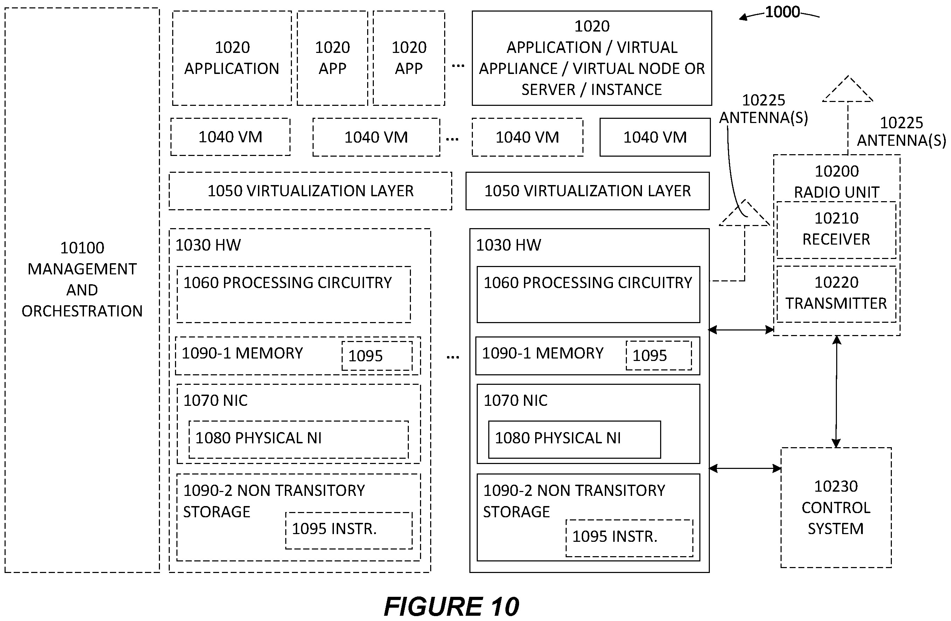

Figure 10 is a schematic block diagram illustrating a virtualization environment 1000 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1000 hosted by one or more of hardware nodes 1030. Further, in embodiments in which the virtual node is not a radio access node or does not require radio connectivity (e.g., a core network node), then the network node may be entirely virtualized.

The functions may be implemented by one or more applications 1020 (which may alternatively be called software instances, virtual appliances, network functions, virtual nodes, virtual network functions, etc.) operative to implement some of the features, functions, and/or benefits of some of the embodiments disclosed herein. Applications 1020 are run in virtualization environment 1000 which provides hardware 1030 comprising processing circuitry 1060 and memory 1090. Memory 1090 contains instructions 1095 executable by processing circuitry 1060 whereby application 1020 is operative to provide one or more of the features, benefits, and/or functions disclosed herein.

Virtualization environment 1000, comprises general-purpose or special-purpose network hardware devices 1030 comprising a set of one or more processors or processing circuitry 1060, which may be commercial off-the-shelf (COTS) processors, dedicated Application Specific Integrated Circuits (ASICs), or any other type of processing circuitry including digital or analog hardware components or special purpose processors. Each hardware device may comprise memory 1090-1 which may be non-persistent memory for temporarily storing instructions 1095 or software executed by processing circuitry 1060. Each hardware device may comprise one or more network interface controllers (NICs) 1070, also known as network interface cards, which include physical network interface 1080. Each hardware device may also include non-transitory, persistent, machine-readable storage media 1090-2 having stored therein software 1095 and/or instructions executable by processing circuitry 1060. Software 1095 may include any type of software including software for instantiating one or more virtualization layers 1050 (also referred to as hypervisors), software to execute virtual machines 1040 as well as software allowing it to execute functions, features and/or benefits described in relation with some embodiments described herein.

Virtual machines 1040, comprise virtual processing, virtual memory, virtual networking or interface and virtual storage, and may be run by a corresponding virtualization layer 1050 or hypervisor. Different embodiments of the instance of virtual appliance 1020 may be implemented on one or more of virtual machines 1040, and the implementations may be made in different ways.

During operation, processing circuitry 1060 executes software 1095 to instantiate the hypervisor or virtualization layer 1050, which may sometimes be referred to as a virtual machine monitor (VMM). Virtualization layer 1050 may present a virtual operating platform that appears like networking hardware to virtual machine 1040.

As shown in Figure 10, hardware 1030 may be a standalone network node with generic or specific components. Hardware 1030 may comprise antenna 10225 and may implement some functions via virtualization. Alternatively, hardware 1030 may be part of a larger cluster of hardware (e.g. such as in a data center or customer premise equipment (CPE)) where many hardware nodes work together and are managed via management and orchestration (MANO) 10100, which, among others, oversees lifecycle management of applications 1020.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1040 may be a software implementation of a physical machine that runs programs as if they were executing on a physical, non-virtualized machine. Each of virtual machines 1040, and that part of hardware 1030 that executes that virtual machine, be it hardware dedicated to that virtual machine and/or hardware shared by that virtual machine with others of the virtual machines 1040, forms a separate virtual network elements (VNE).

Still in the context of NFV, Virtual Network Function (VNF) is responsible for handling specific network functions that run in one or more virtual machines 1040 on top of hardware networking infrastructure 1030 and corresponds to application 1020 in Figure 10.

In some embodiments, one or more radio units 10200 that each include one or more transmitters 10220 and one or more receivers 10210 may be coupled to one or more antennas 10225. Radio units 10200 may communicate directly with hardware nodes 1030 via one or more appropriate network interfaces and may be used in combination with the virtual components to provide a virtual node with radio capabilities, such as a radio access node or a base station.

In some embodiments, some signalling can be effected with the use of control system 10230 which may alternatively be used for communication between the hardware nodes 1030 and radio units 10200.

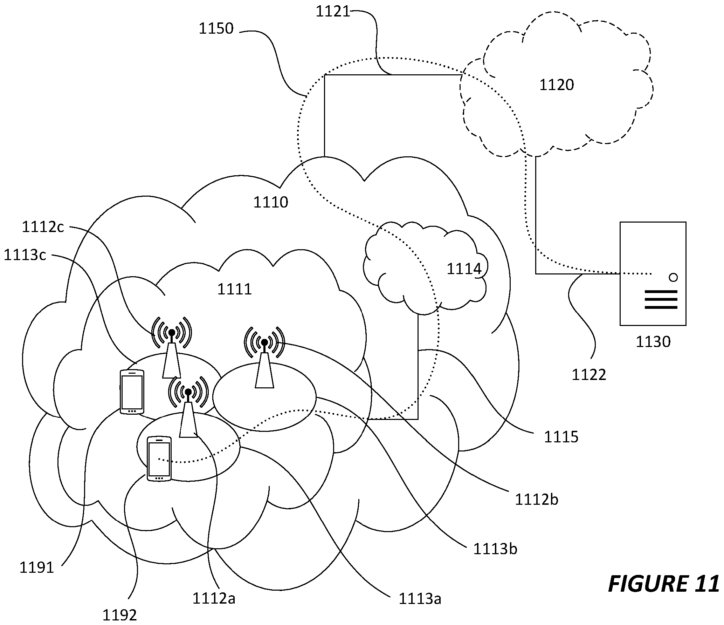

Figure 11 illustrates a telecommunication network connected via an intermediate network to a host computer in accordance with some embodiments. In particular, with reference to FIGURE 11, in accordance with an embodiment, a communication system includes telecommunication network 1110, such as a 3GPP-type cellular network, which comprises access network 1111, such as a radio access network, and core network 1114. Access network 1111 comprises a plurality of base stations 1112a, 1112b, 1112c, such as NBs, eNBs, gNBs or other types of wireless access points, each defining a corresponding coverage area 1113a, 1113b, 1113c. Each base station 1112a, 1112b, 1112c is connectable to core network 1114 over a wired or wireless connection 1115. A first UE 1191 located in coverage area 1113c is configured to wirelessly connect to, or be paged by, the corresponding base station 1112c. A second UE 1192 in coverage area 1113a is wirelessly connectable to the corresponding base station 1112a. While a plurality of UEs 1191, 1192 are illustrated in this example, the disclosed embodiments are equally applicable to a situation where a sole UE is in the coverage area or where a sole UE is connecting to the corresponding base station 1112.

Telecommunication network 1110 is itself connected to host computer 1130, which may be embodied in the hardware and/or software of a standalone server, a cloud-implemented server, a distributed server or as processing resources in a server farm. Host computer 1130 may be under the ownership or control of a service provider, or may be operated by the service provider or on behalf of the service provider. Connections 1121 and 1122 between telecommunication network 1110 and host computer 1130 may extend directly from core network 1114 to host computer 1130 or may go via an optional intermediate network 1120. Intermediate network 1120 may be one of, or a combination of more than one of, a public, private or hosted network; intermediate network 1120, if any, may be a backbone network or the Internet; in particular, intermediate network 1120 may comprise two or more sub-networks (not shown).

The communication system of Figure 11 as a whole enables connectivity between the connected UEs 1191, 1192 and host computer 1130. The connectivity may be described as an over-the-top (OTT) connection 1150. Host computer 1130 and the connected UEs 1191, 1192 are configured to communicate data and/or signaling via OTT connection 1150, using access network 1111, core network 1114, any intermediate network 1120 and possible further infrastructure (not shown) as intermediaries. OTT connection 1150 may be transparent in the sense that the participating communication devices through which OTT connection 1150 passes are unaware of routing of uplink and downlink communications. For example, base station 1112 may not or need not be informed about the past routing of an incoming downlink communication with data originating from host computer 1130 to be forwarded (e.g., handed over) to a connected UE 1191. Similarly, base station 1112 need not be aware of the future routing of an outgoing uplink communication originating from the UE 1191 towards the host computer 1130.

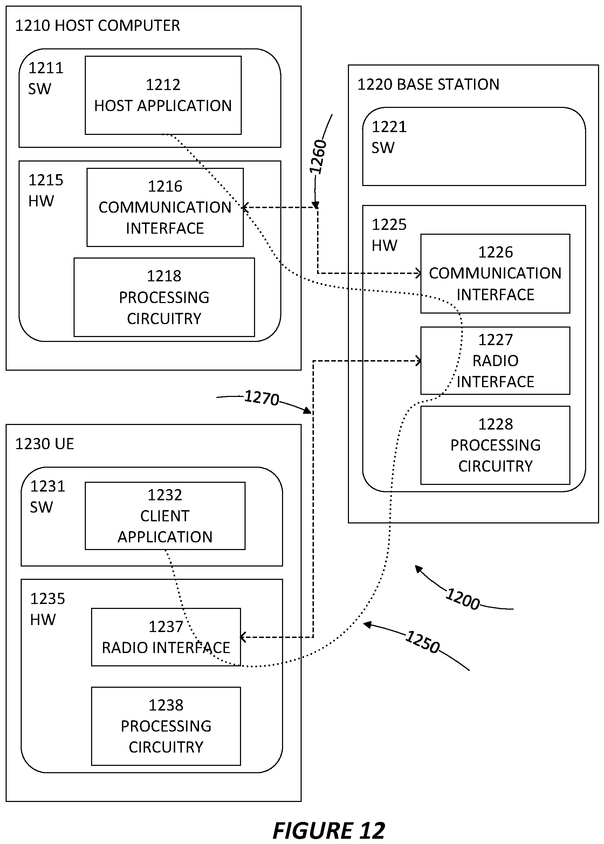

Example implementations, in accordance with an embodiment, of the UE, base station and host computer discussed in the preceding paragraphs will now be described with reference to Figure 12. Figure 12 illustrates host computer communicating via a base station with a user equipment over a partially wireless connection in accordance with some embodiments In communication system 1200, host computer 1210 comprises hardware 1215 including communication interface 1216 configured to set up and maintain a wired or wireless connection with an interface of a different communication device of communication system 1200. Host computer 1210 further comprises processing circuitry 1218, which may have storage and/or processing capabilities. In particular, processing circuitry 1218 may comprise one or more programmable processors, application-specific integrated circuits, field programmable gate arrays or combinations of these (not shown) adapted to execute instructions. Host computer 1210 further comprises software 1211, which is stored in or accessible by host computer 1210 and executable by processing circuitry 1218. Software 1211 includes host application 1212. Host application 1212 may be operable to provide a service to a remote user, such as UE 1230 connecting via OTT connection 1250 terminating at UE 1230 and host computer 1210. In providing the service to the remote user, host application 1212 may provide user data which is transmitted using OTT connection 1250.

Communication system 1200 further includes base station 1220 provided in a telecommunication system and comprising hardware 1225 enabling it to communicate with host computer 1210 and with UE 1230. Hardware 1225 may include communication interface 1226 for setting up and maintaining a wired or wireless connection with an interface of a different communication device of communication system 1200, as well as radio interface 1227 for setting up and maintaining at least wireless connection 1270 with UE 1230 located in a coverage area (not shown in Figure 12) served by base station 1220. Communication interface 1226 may be configured to facilitate connection 1260 to host computer 1210. Connection 1260 may be direct or it may pass through a core network (not shown in Figure 12) of the telecommunication system and/or through one or more intermediate networks outside the telecommunication system. In the embodiment shown, hardware 1225 of base station 1220 further includes processing circuitry 1228, which may comprise one or more programmable processors, application-specific integrated circuits, field programmable gate arrays or combinations of these (not shown) adapted to execute instructions. Base station 1220 further has software 1221 stored internally or accessible via an external connection.

Communication system 1200 further includes UE 1230 already referred to. Its hardware 1235 may include radio interface 1237 configured to set up and maintain wireless connection 1270 with a base station serving a coverage area in which UE 1230 is currently located. Hardware 1235 of UE 1230 further includes processing circuitry 1238, which may comprise one or more programmable processors, application-specific integrated circuits, field programmable gate arrays or combinations of these (not shown) adapted to execute instructions. UE 1230 further comprises software 1231, which is stored in or accessible by UE 1230 and executable by processing circuitry 1238. Software 1231 includes client application 1232. Client application 1232 may be operable to provide a service to a human or non-human user via UE 1230, with the support of host computer 1210. In host computer 1210, an executing host application 1212 may communicate with the executing client application 1232 via OTT connection 1250 terminating at UE 1230 and host computer 1210. In providing the service to the user, client application 1232 may receive request data from host application 1212 and provide user data in response to the request data. OTT connection 1250 may transfer both the request data and the user data. Client application 1232 may interact with the user to generate the user data that it provides.

It is noted that host computer 1210, base station 1220 and UE 1230 illustrated in Figure 12 may be similar or identical to host computer 1130, one of base stations 1112a, 1112b, 1112c and one of UEs 1191, 1192 of Figure 11, respectively. This is to say, the inner workings of these entities may be as shown in Figure 12 and independently, the surrounding network topology may be that of Figure 11.

In Figure 12, OTT connection 1250 has been drawn abstractly to illustrate the communication between host computer 1210 and UE 1230 via base station 1220, without explicit reference to any intermediary devices and the precise routing of messages via these devices. Network infrastructure may determine the routing, which it may be configured to hide from UE 1230 or from the service provider operating host computer 1210, or both. While OTT connection 1250 is active, the network infrastructure may further take decisions by which it dynamically changes the routing (e.g., on the basis of load balancing consideration or reconfiguration of the network).

Wireless connection 1270 between UE 1230 and base station 1220 is in accordance with the teachings of the embodiments described throughout this disclosure. One or more of the various embodiments improve the performance of OTT services provided to UE 1230 using OTT connection 1250, in which wireless connection 1270 forms the last segment.

A measurement procedure may be provided for the purpose of monitoring data rate, latency and other factors on which the one or more embodiments improve. There may further be an optional network functionality for reconfiguring OTT connection 1250 between host computer 1210 and UE 1230, in response to variations in the measurement results. The measurement procedure and/or the network functionality for reconfiguring OTT connection 1250 may be implemented in software 1211 and hardware 1215 of host computer 1210 or in software 1231 and hardware 1235 of UE 1230, or both. In embodiments, sensors (not shown) may be deployed in or in association with communication devices through which OTT connection 1250 passes; the sensors may participate in the measurement procedure by supplying values of the monitored quantities exemplified above, or supplying values of other physical quantities from which software 1211, 1231 may compute or estimate the monitored quantities. The reconfiguring of OTT connection 1250 may include message format, retransmission settings, preferred routing etc.; the reconfiguring need not affect base station 1220, and it may be unknown or imperceptible to base station 1220. Such procedures and functionalities may be known and practiced in the art. In certain embodiments, measurements may involve proprietary UE signaling facilitating host computer 1210's measurements of throughput, propagation times, latency and the like. The measurements may be implemented in that software 1211 and 1231 causes messages to be transmitted, in particular empty or 'dummy' messages, using OTT connection 1250 while it monitors propagation times, errors etc.

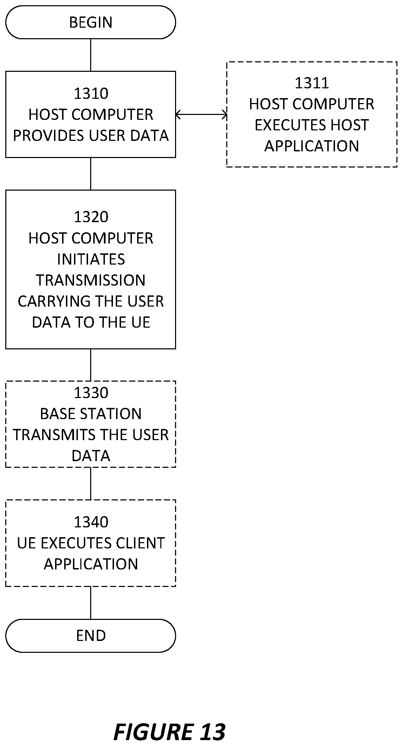

Figure 13 is a flowchart illustrating a method implemented in a communication system, in accordance with one embodiment, which is not according to the claimed invention. The communication system includes a host computer, a base station and a UE which may be those described with reference to Figures 11 and 12. For simplicity of the present disclosure, only drawing references to Figure 13 will be included in this section. In step 1310, the host computer provides user data. In substep 1311 (which may be optional) of step 1310, the host computer provides the user data by executing a host application. In step 1320, the host computer initiates a transmission carrying the user data to the UE. In step 1330 (which may be optional), the base station transmits to the UE the user data which was carried in the transmission that the host computer initiated, in accordance with the teachings of the embodiments described throughout this disclosure. In step 1340 (which may also be optional), the UE executes a client application associated with the host application executed by the host computer.

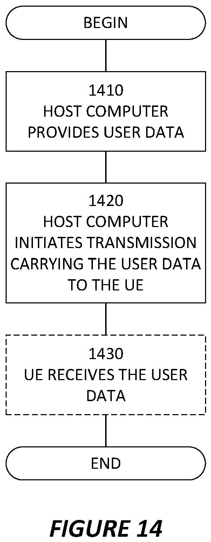

Figure 14 is a flowchart illustrating a method implemented in a communication system, in accordance with one embodiment, which is not according to the claimed invention. The communication system includes a host computer, a base station and a UE which may be those described with reference to Figures 11 and 12. For simplicity of the present disclosure, only drawing references to Figure 14 will be included in this section. In step 1410 of the method, the host computer provides user data. In an optional substep (not shown) the host computer provides the user data by executing a host application. In step 1420, the host computer initiates a transmission carrying the user data to the UE. The transmission may pass via the base station, in accordance with the teachings of the embodiments described throughout this disclosure. In step 1430 (which may be optional), the UE receives the user data carried in the transmission.

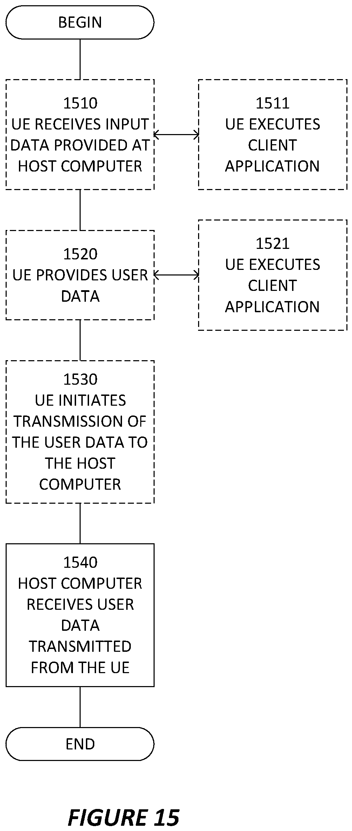

Figure 15 is a flowchart illustrating a method implemented in a communication system, in accordance with one embodiment, which is not according to the claimed invention. The communication system includes a host computer, a base station and a UE which may be those described with reference to Figures 11 and 12. For simplicity of the present disclosure, only drawing references to Figure 15 will be included in this section. In step 1510 (which may be optional), the UE receives input data provided by the host computer. Additionally or alternatively, in step 1520, the UE provides user data. In substep 1521 (which may be optional) of step 1520, the UE provides the user data by executing a client application. In substep 1511 (which may be optional) of step 1510, the UE executes a client application which provides the user data in reaction to the received input data provided by the host computer. In providing the user data, the executed client application may further consider user input received from the user. Regardless of the specific manner in which the user data was provided, the UE initiates, in substep 1530 (which may be optional), transmission of the user data to the host computer. In step 1540 of the method, the host computer receives the user data transmitted from the UE, in accordance with the teachings of the embodiments described throughout this disclosure.

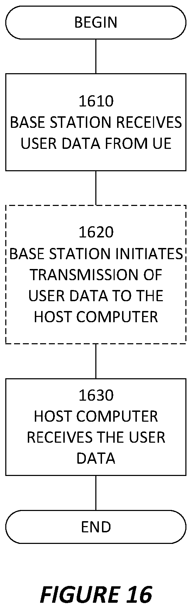

Figure 16 is a flowchart illustrating a method implemented in a communication system, in accordance with one embodiment, which is not according to the claimed invention. The communication system includes a host computer, a base station and a UE which may be those described with reference to Figures 11 and 12. For simplicity of the present disclosure, only drawing references to Figure 16 will be included in this section. In step 1610 (which may be optional), in accordance with the teachings of the embodiments described throughout this disclosure, the base station receives user data from the UE. In step 1620 (which may be optional), the base station initiates transmission of the received user data to the host computer. In step 1630 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

In view of the above, then, embodiments herein generally include a communication system including a host computer. The host computer may comprise processing circuitry configured to provide user data. The host computer may also comprise a communication interface configured to forward the user data to a cellular network for transmission to a user equipment (UE). The cellular network may comprise a base station having a radio interface and processing circuitry, the base station's processing circuitry configured to perform any of the steps of any of the embodiments described above for a base station.

In some embodiments, the communication system further includes the base station.

In some embodiments, the communication system further includes the UE, wherein the UE is configured to communicate with the base station.

In some embodiments, the processing circuitry of the host computer is configured to execute a host application, thereby providing the user data. In this case, the UE comprises processing circuitry configured to execute a client application associated with the host application.

Embodiments herein also include a method implemented in a communication system including a host computer, a base station and a user equipment (UE). The method comprises, at the host computer, providing user data. The method may also comprise, at the host computer, initiating a transmission carrying the user data to the UE via a cellular network comprising the base station. The base station performs any of the steps of any of the embodiments described above for a base station.

In some embodiments, the method further comprising, at the base station, transmitting the user data.

In some embodiments, the user data is provided at the host computer by executing a host application. In this case, the method further comprises, at the UE, executing a client application associated with the host application.

Embodiments herein also include a user equipment (UE) configured to communicate with a base station. The UE comprises a radio interface and processing circuitry configured to perform any of the embodiments above described for a UE.

Embodiments herein further include a communication system including a host computer. The host computer comprises processing circuitry configured to provide user data, and a communication interface configured to forward user data to a cellular network for transmission to a user equipment (UE). The UE comprises a radio interface and processing circuitry. The UE's components are configured to perform any of the steps of any of the embodiments described above for a UE.

In some embodiments, the cellular network further includes a base station configured to communicate with the UE.

In some embodiments, the processing circuitry of the host computer is configured to execute a host application, thereby providing the user data. The UE's processing circuitry is configured to execute a client application associated with the host application.

Embodiments also include a method implemented in a communication system including a host computer, a base station and a user equipment (UE). The method comprises, at the host computer, providing user data and initiating a transmission carrying the user data to the UE via a cellular network comprising the base station. The UE performs any of the steps of any of the embodiments described above for a UE.

In some embodiments, the method further comprises, at the UE, receiving the user data from the base station.

Embodiments herein further include a communication system including a host computer. The host computer comprises a communication interface configured to receive user data originating from a transmission from a user equipment (UE) to a base station. The UE comprises a radio interface and processing circuitry. The UE's processing circuitry is configured to perform any of the steps of any of the embodiments described above for a UE.

In some embodiments the communication system further includes the UE.

In some embodiments, the communication system further including the base station. In this case, the base station comprises a radio interface configured to communicate with the UE and a communication interface configured to forward to the host computer the user data carried by a transmission from the UE to the base station.

In some embodiments, the processing circuitry of the host computer is configured to execute a host application. And the UE's processing circuitry is configured to execute a client application associated with the host application, thereby providing the user data.

In some embodiments, the processing circuitry of the host computer is configured to execute a host application, thereby providing request data. And the UE's processing circuitry is configured to execute a client application associated with the host application, thereby providing the user data in response to the request data.

Embodiments herein also include a method implemented in a communication system including a host computer, a base station and a user equipment (UE). The method comprises, at the host computer, receiving user data transmitted to the base station from the UE. The UE performs any of the steps of any of the embodiments described above for the UE.

In some embodiments, the method further comprises, at the UE, providing the user data to the base station.

In some embodiments, the method also comprises, at the UE, executing a client application, thereby providing the user data to be transmitted. The method may further comprise, at the host computer, executing a host application associated with the client application.

In some embodiments, the method further comprises, at the UE, executing a client application, and, at the UE, receiving input data to the client application. The input data is provided at the host computer by executing a host application associated with the client application. The user data to be transmitted is provided by the client application in response to the input data.

Embodiments also include a communication system including a host computer. The host computer comprises a communication interface configured to receive user data originating from a transmission from a user equipment (UE) to a base station. The base station comprises a radio interface and processing circuitry. The base station's processing circuitry is configured to perform any of the steps of any of the embodiments described above for a base station.

In some embodiments, the communication system further includes the base station.

In some embodiments, the communication system further includes the UE. The UE is configured to communicate with the base station.

In some embodiments, the processing circuitry of the host computer is configured to execute a host application. And the UE is configured to execute a client application associated with the host application, thereby providing the user data to be received by the host computer.

Embodiments moreover include a method implemented in a communication system including a host computer, a base station and a user equipment (UE). The method comprises, at the host computer, receiving, from the base station, user data originating from a transmission which the base station has received from the UE. The UE performs any of the steps of any of the embodiments described above for a UE.

In some embodiments, the method further comprises, at the base station, receiving the user data from the UE.

In some embodiments, the method further comprises, at the base station, initiating a transmission of the received user data to the host computer.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Some of the embodiments contemplated herein are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

## Claims

1. A method performed by a wireless device (18), the method comprising:
detecting (200) a failure associated with a first cell group (14A) among multiple cell groups (14A, 14B) that are respectively provided by multiple radio network nodes (12A, 12B) to which the wireless device (18) simultaneously connects in multi-connectivity operation; and
transmitting (210) a report (20) that reports the detected failure in the first cell group (14A) to a radio network node that provides a second cell group (14B) included in the multiple cell groups (14A, 14B), wherein the second cell group (14B) is different than the first cell group (14A), wherein the report (20) includes information about a conditional configuration (16) stored at the wireless device (18).

2. The method of claim 1, wherein the information about a conditional configuration (16) stored at the wireless device (18), includes information identifying one or more cells and/or one or more frequencies for which the wireless device (18) has a conditional configuration (16) stored, and wherein the conditional configuration (16) is a conditional handover configuration.

3. The method of any of claims 1-2, wherein the information about a conditional configuration (16) stored at the wireless device (18) includes information about a trigger condition on which the conditional configuration (16) depends, wherein the information about the trigger condition includes one or more of:
information identifying or describing the trigger condition;
information on whether the trigger condition has been fulfilled; or
information on how close the trigger condition was to being fulfilled when the failure was detected.

4. The method of any of claims 1-3, wherein the conditional configuration (16) is:
a conditional PSCell change or addition configuration that conditionally configures a change to or addition of a PSCell for said multi-connectivity operation, wherein a PSCell is a primary cell of a secondary cell group included in said multiple cell groups (14A, 14B).

5. A method performed by a radio network node (12B) that provides a second cell group (14B), the method comprising:
receiving (300), from a wireless device (18) which is simultaneously connected in multi-connectivity operation to multiple radio network nodes (12A, 12B) that respectively provide multiple cell groups (14A, 14B), a report (20) that reports a failure associated with a first cell group (14A) among the multiple cell groups (14A, 14B), wherein the second cell group (14B) is different than the first cell group (14A) and wherein the report (20) includes information about a conditional configuration (16) stored at the wireless device (18).

6. The method of claim 5, wherein the information about a conditional configuration (16) stored at the wireless device (18) includes information identifying one or more cells and/or one or more frequencies for which the wireless device (18) has a conditional configuration (16) stored, and wherein the conditional configuration (16) is a conditional handover configuration.

7. The method of any of claims 5-6, wherein the information about a conditional configuration (16) stored at the wireless device (18) includes information about a trigger condition on which the conditional configuration (16) depends wherein the information about the trigger condition includes one or more of:
information identifying or describing the trigger condition;
information on whether the trigger condition has been fulfilled; or
information on how close the trigger condition was to being fulfilled when the failure was detected.

8. The method of any of claims 5-7, wherein the conditional configuration (16) is:
a conditional PSCell change or addition configuration that conditionally configures a change to or addition of a PSCell for said multi-connectivity operation, wherein a PSCell is a primary cell of a secondary cell group included in said multiple cell groups (14A, 14B).

9. The method of any of claims 5-8, further comprising:
based on the received report (20), deciding (310) whether to modify or release the conditional configuration (16); and
modifying or releasing the conditional configuration (16) depending on said deciding.

10. The method of any of claims 5-9, further comprising, based on the received report (20), deciding (300) whether to trigger a procedure for preparing a target candidate for at least one of any one or more of: secondary cell group addition or change, conditional PSCell addition or change, handover, and conditional handover.

11. A wireless device (18) configured to:
detect a failure associated with a first cell group (14A) among multiple cell groups (14A, 14B) that are respectively provided by multiple radio network nodes (12A, 12B) to which the wireless device (18) simultaneously connects in multi-connectivity operation; and
transmit a report (20) that reports the detected failure in the first cell group (14A) to a radio network node that provides a second cell group (14B) included in the multiple cell groups (14A, 14B), wherein the second cell group (14B) is different than the first cell group, , wherein the report (20) includes information about a conditional configuration (16) stored at the wireless device (18).

12. The wireless device (18) of claim 11, configured to perform the method of any of claims 2-4.

13. A radio network node (12B) configured to provide a second cell group (14B), the radio network node configured to:
receive, from a wireless device (18) which is simultaneously connected in multi-connectivity operation to multiple radio network nodes (12A, 12B) that respectively provide multiple cell groups (14A, 14B), a report (20) that reports a failure associated with a first cell group (14A) among the multiple cell groups (14A, 14B), wherein the second cell group (14B) is different than the first cell group (14A) and wherein the report (20) includes information about a conditional configuration (16) stored at the wireless device (18).

14. The radio network node of claim 13, configured to perform the method of any of claims 6-10.

15. A computer program comprising instructions which, when executed by at least one processor of a wireless device (18), causes the wireless device (18) to perform the method of any of claims 1-4.

16. A computer program comprising instructions which, when executed by at least one processor of a radio network node (12A, 12B), causes the radio network node (12A, 12B) to perform the method of any of claims 5-10.

17. A data carrier signal carrying the computer program of any of claims 15-16, wherein the data carrier signal is one of an electronic signal, optical signal, radio signal.

## Patentansprüche

1. Verfahren, das durch eine drahtlose Vorrichtung (18) durchgeführt wird, wobei das Verfahren Folgendes umfasst:
Entdecken (200) eines Fehlers, der einer ersten Zellengruppe (14A) unter mehreren Zellengruppen (14A, 14B) zugeordnet ist, die jeweils durch mehrere Funknetzknoten (12A, 12B) bereitgestellt sind, mit denen sich die drahtlose Vorrichtung (18) in einem Mehrfachverbindungsbetrieb gleichzeitig verbindet; und
Übertragen (210) eines Berichts (20), der über den entdeckten Fehler in der ersten Zellengruppe (14A) einem Funknetzknoten Bericht erstattet, der eine zweite Zellengruppe (14B) bereitstellt, die in den mehreren Zellengruppen (14A, 14B) beinhaltet ist, wobei sich die zweite Zellengruppe (14B) von der ersten Zellengruppe (14A) unterscheidet, wobei der Bericht (20) Informationen über eine bedingte Konfiguration (16) beinhaltet, die auf der drahtlosen Vorrichtung (18) gespeichert sind.

2. Verfahren nach Anspruch 1, wobei die Informationen über eine bedingte Konfiguration (16), die auf der drahtlosen Vorrichtung (18) gespeichert sind, Informationen beinhalten, die eine oder mehrere Zellen und/oder eine oder mehrere Frequenzen identifizieren, für welche die drahtlose Vorrichtung (18) eine gespeicherte bedingte Konfiguration (16) aufweist, und wobei es sich bei der bedingten Konfiguration (16) um eine bedingte Übergabekonfiguration handelt.

3. Verfahren nach einem der Ansprüche 1-2, wobei die Informationen über eine bedingte Konfiguration (16), die auf der drahtlosen Vorrichtung (18) gespeichert sind, Informationen über eine Auslösebedingung beinhalten, von der die bedingte Konfiguration (16) abhängt, wobei die Informationen über die Auslösebedingung eines oder mehrere von Folgenden beinhalten:
Informationen, welche die Auslösebedingung identifizieren oder beschreiben;
Informationen darüber, ob die Auslösebedingung erfüllt worden ist; oder
Informationen darüber, wie knapp die Auslösebedingung erfüllt war, als der Fehler entdeckt wurde.

4. Verfahren nach einem der Ansprüche 1-3, wobei die bedingte Konfiguration (16) wie folgt lautet:
eine bedingte PSCell-Änderungs- oder - Hinzufügungskonfiguration, die eine Änderung oder Hinzufügung einer PSCell für den Mehrfachverbindungsbetrieb bedingt konfiguriert, wobei es sich bei einer PSCell um eine primäre Zelle einer sekundären Zellengruppe handelt, die in den mehreren Zellengruppen (14A, 14B) beinhaltet ist.

5. Verfahren, das durch einen Funknetzknoten (12B) durchgeführt wird, der eine zweite Zellengruppe (14B) bereitstellt, wobei das Verfahren Folgendes umfasst:
Empfangen (300), von einer drahtlosen Vorrichtung (18), die in einem Mehrfachverbindungsbetrieb gleichzeitig mit mehreren Funknetzknoten (12A, 12B) verbunden ist, die jeweils mehrere Zellengruppen (14A, 14B) bereitstellen, eines Berichts (20), der über einen Fehler Bericht erstattet, der einer ersten Zellengruppe (14A) unter den mehreren Zellengruppen (14A, 14B) zugeordnet ist, wobei sich die zweite Zellengruppe (14B) von der ersten Zellengruppe (14A) unterscheidet und wobei der Bericht (20) Informationen über eine bedingte Konfiguration (16) beinhaltet, die auf der drahtlosen Vorrichtung (18) gespeichert sind.

6. Verfahren nach Anspruch 5, wobei die Informationen über eine bedingte Konfiguration (16), die auf der drahtlosen Vorrichtung (18) gespeichert sind, Informationen beinhalten, die eine oder mehrere Zellen und/oder eine oder mehrere Frequenzen identifizieren, für welche die drahtlose Vorrichtung (18) eine gespeicherte bedingte Konfiguration (16) aufweist, und wobei es sich bei der bedingten Konfiguration (16) um eine bedingte Übergabekonfiguration handelt.

7. Verfahren nach einem der Ansprüche 5-6, wobei die Informationen über eine bedingte Konfiguration (16), die auf der drahtlosen Vorrichtung (18) gespeichert sind, Informationen über eine Auslösebedingung beinhalten, von der die bedingte Konfiguration (16) abhängt, wobei die Informationen über die Auslösebedingung eines oder mehrere von Folgenden beinhalten:
Informationen, welche die Auslösebedingung identifizieren oder beschreiben;
Informationen darüber, ob die Auslösebedingung erfüllt worden ist; oder
Informationen darüber, wie knapp die Auslösebedingung erfüllt war, als der Fehler entdeckt wurde.

8. Verfahren nach einem der Ansprüche 5-7, wobei die bedingte Konfiguration (16) wie folgt lautet:
eine bedingte PSCell-Änderungs- oder - Hinzufügungskonfiguration, die eine Änderung oder Hinzufügung einer PSCell für den Mehrfachverbindungsbetrieb bedingt konfiguriert, wobei es sich bei einer PSCell um eine primäre Zelle einer sekundären Zellengruppe handelt, die in den mehreren Zellengruppen (14A, 14B) beinhaltet ist.

9. Verfahren nach einem der Ansprüche 5-8, ferner umfassend:
basierend auf dem empfangenen Bericht (20), Entscheiden (310), ob die bedingte Konfiguration (16) zu modifizieren oder freizugeben ist; und
Modifizieren oder Freigeben der bedingten Konfiguration (16) in Abhängigkeit von dem Entscheiden.

10. Verfahren nach einem der Ansprüche 5-9, ferner umfassend, basierend auf dem empfangenen Bericht (20), Entscheiden (300), ob eine Prozedur zum Vorbereiten eines Zielkandidaten für mindestens eines oder mehrere von Folgenden auszulösen ist:
Hinzufügung oder Änderung einer sekundären Zellengruppe, bedingte PSCell-Hinzufügung oder -Änderung, Übergabe und bedingte Übergabe.

11. Drahtlose Vorrichtung (18), die zu Folgendem konfiguriert ist:
Entdecken eines Fehlers, der einer ersten Zellengruppe (14A) unter mehreren Zellengruppen (14A, 14B) zugeordnet ist, die jeweils durch mehrere Funknetzknoten (12A, 12B) bereitgestellt sind, mit denen sich die drahtlose Vorrichtung (18) in einem Mehrfachverbindungsbetrieb gleichzeitig verbindet; und
Übertragen eines Berichts (20), der den entdeckten Fehler in der ersten Zellengruppe (14A) einem Funknetzknoten berichtet, der eine zweite Zellengruppe (14B) bereitstellt, die in den mehreren Zellengruppen (14A, 14B) beinhaltet ist, wobei sich die zweite Zellengruppe (14B) von der ersten Zellengruppe unterscheidet, wobei der Bericht (20) Informationen über eine bedingte Konfiguration (16) beinhaltet, die auf der drahtlosen Vorrichtung (18) gespeichert sind.

12. Drahtlose Vorrichtung (18) nach Anspruch 11, die dazu konfiguriert ist, das Verfahren nach einem der Ansprüche 2-4 durchzuführen.

13. Funknetzknoten (12B), der dazu konfiguriert ist, eine zweite Zellengruppe (14B) bereitzustellen, wobei der Funknetzknoten zu Folgendem konfiguriert ist:
Empfangen, von einer drahtlosen Vorrichtung (18), die in einem Mehrfachverbindungsbetrieb gleichzeitig mit mehreren Funknetzknoten (12A, 12B) verbunden ist, die jeweils mehrere Zellengruppen (14A, 14B) bereitstellen, eines Berichts (20), der über einen Fehler, der einer ersten Zellengruppe (14A) unter den mehreren Zellengruppen (14A, 14B) zugeordnet ist, Bericht erstattet, wobei die zweite Zellengruppe (14B) sich von der ersten Zellengruppe (14A) unterscheidet und wobei der Bericht (20) Informationen über eine bedingte Konfiguration (16) beinhaltet, die auf der drahtlosen Vorrichtung (18) gespeichert sind.

14. Funknetzknoten nach Anspruch 13, der dazu konfiguriert ist, das Verfahren nach einem der Ansprüche 6-10 durchzuführen.

15. Computerprogramm, umfassend Anweisungen, die, wenn sie durch mindestens einen Prozessor einer drahtlosen Vorrichtung (18) ausgeführt werden, die drahtlose Vorrichtung (18) dazu veranlassen, das Verfahren nach einem der Ansprüche 1-4 durchzuführen.

16. Computerprogramm, umfassend Anweisungen, die, wenn sie durch mindestens einen Prozessor eines Funknetzknotens (12A, 12B) ausgeführt werden, den Funknetzknoten (12A, 12B) dazu veranlassen, das Verfahren nach einem der Ansprüche 5-10 durchzuführen.

17. Datenträgersignal, welches das Computerprogramm nach einem der Ansprüche 15-16 trägt, wobei es sich bei dem Datenträgersignal um eines von einem elektronischen Signal, optischen Signal oder Funksignal handelt.

## Revendications

1. Procédé mis en œuvre par un dispositif sans fil (18), le procédé comprenant :
la détection (200) d'une défaillance associée à un premier groupe de cellules (14A) parmi de multiples groupes de cellules (14A, 14B) qui sont respectivement fournis par de multiples nœuds de réseau radio (12A, 12B) auxquels le dispositif sans fil (18) se connecte simultanément dans une opération de multi-connectivité ; et
la transmission (210) d'un rapport (20) qui signale la défaillance détectée dans le premier groupe de cellules (14A) à un nœud de réseau radio qui fournit un second groupe de cellules (14B) inclus dans les multiples groupes de cellules (14A, 14B), le second groupe de cellules (14B) étant différent du premier groupe de cellules (14A), le rapport (20) comprenant des informations sur une configuration conditionnelle (16) stockée au niveau du dispositif sans fil (18).

2. Procédé selon la revendication 1, dans lequel les informations concernant une configuration conditionnelle (16) stockées au niveau du dispositif sans fil (18) comprennent des informations identifiant une ou plusieurs cellules et/ou une ou plusieurs fréquences pour lesquelles le dispositif sans fil (18) possède une configuration conditionnelle (16) stockée, et dans lequel la configuration conditionnelle (16) est une configuration de transfert conditionnel.

3. Procédé selon l'une quelconque des revendications 1 à 2, dans lequel les informations concernant une configuration conditionnelle (16) stockées dans le dispositif sans fil (18) comprennent des informations concernant une condition de déclenchement dont dépend la configuration conditionnelle (16), dans lequel les informations concernant la condition de déclenchement comprennent une ou plusieurs des informations suivantes :
des informations identifiant ou décrivant la condition de déclenchement ;
des informations indiquant si la condition de déclenchement a été remplie ; ou
des informations sur la proximité de la condition de déclenchement par rapport à sa réalisation lorsque la défaillance a été détectée.

4. Procédé selon l'une quelconque des revendications 1 à 3, dans lequel la configuration conditionnelle (16) est :
une configuration de changement ou d'ajout de PSCell conditionnelle qui configure de manière conditionnelle un changement ou un ajout d'une PSCell pour ladite opération de multi-connectivité, dans lequel une PSCell est une cellule primaire d'un groupe de cellules secondaires inclus dans lesdits multiples groupes de cellules (14A, 14B).

5. Procédé mis en œuvre par un nœud de réseau radio (12B) qui fournit un second groupe de cellules (14B), le procédé comprenant :
la réception (300), en provenance d'un dispositif sans fil (18) qui est connecté simultanément en opération de multi-connectivité à de multiples nœuds de réseau radio (12A, 12B) qui fournissent respectivement de multiples groupes de cellules (14A, 14B), d'un rapport (20) qui signale une défaillance associée à un premier groupe de cellules (14A) parmi les multiples groupes de cellules (14A, 14B), le second groupe de cellules (14B) étant différent du premier groupe de cellules (14A) et le rapport (20) comprenant des informations sur une configuration conditionnelle (16) stockées au niveau du dispositif sans fil (18).

6. Procédé selon la revendication 5, dans lequel les informations concernant une configuration conditionnelle (16) stockées au niveau du dispositif sans fil (18) comprennent des informations identifiant une ou plusieurs cellules et/ou une ou plusieurs fréquences pour lesquelles le dispositif sans fil (18) possède une configuration conditionnelle (16) stockée, et dans lequel la configuration conditionnelle (16) est une configuration de transfert conditionnel.

7. Procédé selon l'une quelconque des revendications 5 à 6, dans lequel les informations concernant une configuration conditionnelle (16) stockées au niveau du dispositif sans fil (18) comprennent des informations concernant une condition de déclenchement dont dépend la configuration conditionnelle (16), dans lequel les informations concernant la condition de déclenchement comprennent une ou plusieurs des informations suivantes :
des informations identifiant ou décrivant la condition de déclenchement ;
des informations indiquant si la condition de déclenchement a été remplie ; ou
des informations sur la proximité de la condition de déclenchement par rapport à sa réalisation lorsque la défaillance a été détectée.

8. Procédé selon l'une quelconque des revendications 5 à 7, dans lequel la configuration conditionnelle (16) est :
une configuration de modification ou d'ajout de PSCell conditionnelle qui configure de manière conditionnelle une modification ou un ajout d'une PSCell pour ladite opération de multi-connectivité, une PSCell étant une cellule primaire d'un groupe de cellules secondaires inclus dans lesdits multiples groupes de cellules (14A, 14B).

9. Procédé selon l'une quelconque des revendications 5 à 8, comprenant en outre :
sur la base du rapport reçu (20), la décision (310) de modifier ou de libérer la configuration conditionnelle (16) ; et
la modification ou la libération de la configuration conditionnelle (16) en fonction de ladite décision.

10. Procédé selon l'une quelconque des revendications 5 à 9, comprenant en outre, sur la base du rapport reçu (20), la décision (300) de déclencher ou non une procédure de préparation d'un candidat cible pour au moins un élément parmi un ou plusieurs éléments parmi : l'ajout ou le changement d'un groupe de cellules secondaires, l'ajout ou le changement conditionnel d'une PSCell, le transfert, et le transfert conditionnel.

11. Dispositif sans fil (18) configuré pour :
détecter une défaillance associée à un premier groupe de cellules (14A) parmi multiples groupes de cellules (14A, 14B) qui sont respectivement fournis par multiples nœuds de réseau radio (12A, 12B) auxquels dispositif sans fil (18) se connecte simultanément dans une opération de multi-connectivité ; et
transmettre un rapport (20) qui signale la défaillance détectée dans le premier groupe de cellules (14A) à un nœud de réseau radio qui fournit un second groupe de cellules (14B) inclus dans les multiples groupes de cellules (14A, 14B), le second groupe de cellules (148) étant différent du premier groupe de cellules, le rapport (20) comprenant des informations sur une configuration conditionnelle (16) stockée dans le dispositif sans fil (18).

12. Dispositif sans fil (18) selon la revendication 11, configuré pour exécuter le procédé selon l'une quelconque des revendications 2 à 4.

13. Nœud de réseau radio (12B) configuré pour fournir un second groupe de cellules (14B), le nœud de réseau radio étant configuré pour :
recevoir, à partir d'un dispositif sans fil (18) qui est connecté simultanément en opération de multi-connectivité à de multiples nœuds de réseau radio (12A, 12B) qui correspondent respectivement à multiples groupes de cellules (14A, 14B), un rapport (20) qui signale une défaillance associée à un premier groupe de cellules (14A) parmi les multiples groupes de cellules (14A, 14B), le second groupe de cellules (14B) étant différent du premier groupe de cellules (14A) et le rapport (20) comprenant des informations sur une configuration conditionnelle (16) stockée au niveau du dispositif sans fil (18).

14. Nœud de réseau radio selon la revendication 13, configuré pour mettre en œuvre le procédé selon l'une quelconque des revendications 6 à 10.

15. Programme informatique comprenant des instructions qui, lorsqu'elles sont exécutées par au moins un processeur d'un dispositif sans fil (18), amènent le dispositif sans fil (18) à exécuter le procédé selon l'une quelconque des revendications 1 à 4.

16. Programme informatique comprenant des instructions qui, lorsqu'elles sont exécutées par au moins un processeur d'un nœud de réseau radio (12A, 12B), amènent le nœud de réseau radio (12A, 12B) à exécuter le procédé selon l'une quelconque des revendications 5 à 10.

17. Signal porteur de données transportant le programme informatique selon l'une quelconque des revendications 15 à 16, le signal porteur de données étant l'un parmi un signal électronique, un signal optique, un signal radio.
